# EUROPÄISCHE PATENTSCHRIFT

(11) **EP 0 539 819 B1**
(45) Veröffentlichungstag und Bekanntmachung des Hinweises auf die Patenterteilung: **10.06.1998**
(21) Anmeldenummer: 92117788.7
(22) Anmeldetag: 17.10.1992
(51) Int. Cl.: C08G 65/26, C08G 18/50

(54) **Hochreaktive, tertiäre Aminogruppen gebunden enthaltende Polyoxyalkylenpolyole, Verfahren zu ihrer Herstellung und ihre Verwendung zur Herstellung von Polyisocyanat-Polyadditionsprodukten**
Highly-reactive polyoxyalkylenepolyols with bound tertiary amino groups, method for their production and their use in the production of polyisocyanate-polyaddition products
Polyoxyalkylènepolyols hautement réactifs contenant des groupes amine tertiaire liés, procédé pour leur production et leur utilisation pour la production de produits de polyaddition de polyisocyanates

(30) Priorität: 29.10.1991 DE 4135588
(43) Veröffentlichungstag der Anmeldung: 05.05.1993
(73) Patentinhaber: BASF Aktiengesellschaft, 67063 Ludwigshafen (DE)
(72) Erfinder: Hinz, Werner, Dr., W-6710 Frankenthal (DE); Adams, Stefan, Dr., W-6700 Ludwigshafen (DE); Koehler, Ulrich, Dr., W-6800 Mannheim 51 (DE); Maletzko, Christian, Dr., W-6800 Mannheim 31 (DE); Vorspohl, Klaus, Dr., W-6700 Ludwigshafen (DE); Zschiesche, Ruth, Dr., W-6800 Mannheim 24 (DE)

(56) Entgegenhaltungen:
- EP-A- 0 047 371
- US-A- 3 105 063
- US-A- 4 368 137
- US-A- 4 555 531

## Beschreibung

Gegenstände der Erfindung sind hochreaktive Polyoxyalkylen-polyole, die hergestellt werden durch Oxalkylierung eines speziellen Startermoleküls, insbesondere von N,N-Dimethyldiaminopropan-1,3, -diaminobutan-1,4 und -dipropylentriamin, mit mindestens einem Alkylenoxid, vorzugsweise Ethylenoxid und/oder 1,2-Propylenoxid, ein Verfahren zur Herstellung dieser Polyoxyalkylen-polyole und ihre Verwendung zur Herstellung von kompakten oder zelligen, vorzugsweise flexiblen Polyisocyanat-Polyadditionsprodukte.

Neben organischen Polyisocyanaten gehören die Verbindungen mit mindestens 2 reaktiven Wasserstoffatomen, wie z.B. Polyamine oder Polyhydroxylverbindungen, zu den wesentlichen Ausgangsstoffen zur Herstellung von Polyisocyanat-Polyadditionsprodukten. Als Polyhydroxylverbindungen, vorzugsweise höhermolekulare Polyhydroxylverbindungen, bewährt haben sich z.B. hydroxylgruppenhaltige Polyacetale, Polyester-polyole und Polyoxyalkylen-polyole.

Geeignete Polyoxyalkylen-polyole können nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das üblicherweise 2 bis 8 reaktive Wasserstoffatome gebunden enthält, oder durch kationische Polymerisation mit Lewis-Säuren, wie z.B. Antimonpentachlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.

Als Startermoleküle eignen sich, wie bereits ausgeführt wurde, Verbindungen mit reaktiven Wasserstoffatomen. Beispielhaft genannt seien Wasser, Polycarbonsäuren, mehrwertige, vorzugsweise niedermolekulare Alkohole, Alkanolamine und aliphatische oder aromatische Polyamine. Als Alkylenoxide finden vorzugsweise Ethylenoxid, 1,2-Propylenoxid oder Mischungen aus Ethylenoxid und 1,2-Propylenoxid Verwendung.

Nach Angaben der US-A-2 674 619 können auf die beschriebene Weise Polyoxyethylen-, Polyoxypropylen- oder Polyoxypropylen-polyoxyethylen-polyole mit Molekulargewichten von mindestens 900 hergestellt werden. Vollständig hydroxypropylierte Alkylendiamine mit 2 bis 6 Kohlenstoffatomen im Alkylenrest werden in der US-A-2 697 113 beschrieben.

Zur Herstellung von starren, rasch härtenden Polyurethan- im folgenden auch abgekürzt PU genannt - -massen finden gemäß DE-A-2 303 669 (US-A-4 000 105) mit Ammoniak, aliphatischen oder aromatischen Polyaminen initiierte Polyoxyalkylen-polyole mit Hydroxyläquivalentgewichten von 50 bis weniger als 250 Verwendung.

Die US-A-3 336 245 beschreibt die Herstellung von tetra- bis hexafunktionellen Polyoxyethylen- und Polyoxypropylen-polyolen auf der Grundlage von aromatischen Di- oder Triaminen, wie z.B. Toluylendiamin, und ihre Verwendung zur Herstellung von PU-Hartschaumstoffen. Nach Angaben der EP-A-0 208 512 eignen sich mit Aminoalkylpiperazin gestartete Polyoxyalkylen-polyole als Polyhydroxylverbindung zur Herstellung von PU-Hartschaumstoff.

Die DE-C-27 11 735 (US-A-4 144 386) beschreibt ein Verfahren zur Herstellung von flexiblen PU-Schaumstoffen mit einer außerordentlich hohen Weichheit. Hierfür geeignete Polyoxyalkylen-polyole besitzen eine Funktionalität von 2 bis 4, ein Hydroxyläquivalentgewicht von 700 bis 2200 und können unter Verwendung beliebiger 2- bis 4-wertiger Alkohole, Diamine oder Alkanolamine, wie z.B. Pentaerythrit, Ethylendiamin oder Triethanolamin, hergestellt werden.

Während bei Polyoxyalkylen-polyolen mit einem niedrigen Molekulargewicht, wie sie beispielsweise zur Herstellung von PU-Hartschaumstoffen Verwendung finden, durch den Einsatz von Aminoverbindungen im Vergleich zu mehrwertigen Alkoholen als Startermoleküle eine deutliche Reaktivitätserhöhung bei der Umsetzung mit Polyisocyanaten erreicht wird, ist dies bei Polyoxyalkylen-polyolen höheren Molekulargewichts, z.B. solchen mit Molekulargewichten größer als 1 800, wie sie z.B. zur Herstellung von PU-Weichschaumstoffen eingesetzt werden, nicht der Fall. Dieser unterschiedliche katalytische Effekt von mit Aminen gestarteten Polyoxyalkylen-polyolen läßt sich so deuten, daß die in die Polyoxyalkylenkette eingebauten tertiären Aminogruppen durch die hochmolekularen und stark verknäuelten Polyoxyalkylenketten stark abgeschirmt sind und dadurch ihre katalytische Wirksamkeit verlieren.

Die Geschwindigkeit der Polyadditionsreaktion von organischen Polyisocyanaten und Verbindungen mit reaktiven Wasserstoffatomen wird außer von der Struktur der Einsatzstoffe von der Reaktionstemperatur und der Mitverwendung von Katalysatoren beeinflußt.

Niedermolekulare, gegen Isocyanatgruppen inerte Aminkatalysatoren, wie z.B. Diazabicyclo(2,2,2)octan, Bis(dimethylaminoethyl)ether oder N,N,N'N'-Tetramethyl-alkylendiamine, sind häufig relativ leicht flüchtig, geruchsintensiv und treten langsam aus dem Polyadditionsprodukt aus. Insbesondere auch in durch "Fogging" in Automobilen auftretenden Filmen und Belägen wurden Aminkatalysatoren als Bestandteil analytisch nachgewiesen. Der Anteil dieser flüchtigen Bestandteile in Polyisocyanat-Polyadditionsprodukten muß daher reduziert werden. Als zukünftiger Grenzwert wird ein Wert kleiner als 1 mg Kondensat angestrebt, gemessen durch die Bestimmung des Fogging nach DIN 75 201, Verfahren B. Um diesen Grenzwert einhalten zu können, muß auf die Verwendung von flüchtigen Aminkatalysatoren weitgehend verzichtet werden.

Die Aufgabe der vorliegenden Erfindung bestand darin, hochmolekulare, tertiäre Aminogruppen aufweisende Polyoxyalkylen-polyole zu entwickeln, deren katalytische Wirksamkeit durch das Molekulargewicht nicht negativ beeinflußt wird, so daß auf den Zusatz von niedermolekularen tertiären Aminen als Katalysator zur Bildung von Polyisocyanat-Polyadditionsprodukten möglichst vollständig verzichtet werden kann. Die Polyoxyalkylen-polyole sollten sich zur Herstellung von flexiblen, kompakten oder zelligen Polyisocyanat-polyadditionsprodukten eignen, mit den übrigen Aufbaukomponenten, insbesondere konventionellen, Aminogruppen freien Polyoxyalkylen-polyolen, gut mischbar sein und zur Bildung von mikrozellularen PU-Elastomeren oder PU-Schaumstoffen in Abwesenheit von Fluorchlorkohlenwasserstoffen verschäumt werden können.

Diese Aufgabe konnte überraschenderweise gelöst werden durch die Verwendung von ausgewählten, tertiäre Aminogruppen aufweisenden Startermolekülen, bei denen im wesentlichen eine räumliche Trennung zwischen tertiären Aminogruppen und Substituenten besteht, zur Bildung der Polyoxyalkylen-polyole.

Gegenstand der Erfindung sind somit hochreaktive Polyoxyalkylen-polyole, die hergestellt werden durch Oxalkylierung mit mindestens einem Alkylenoxid eines Startermoleküls der Formel 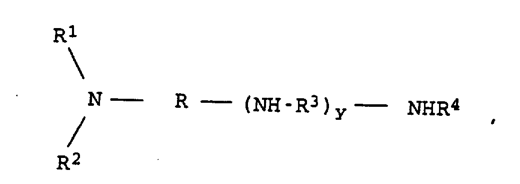 in der bedeuten
- R: eine Spacerbrücke, die ein Alkylenrest mit mindestens 3 Kohlenstoffatomen ist,
- R¹ und R²: gleiche oder verschiedene, lineare oder verzweigte C₁-bis C₄-Alkylreste,
beide Reste gemeinsam einen C₄- bis C₆-Cycloalkylenrest, der anstelle einer Methylengruppe ein -O- oder -NR⁵- Brückenglied enthalten kann, in dem R⁵ ein C₁- bis C₄-Alkylrest ist, oder
gleiche oder verschiedene Dialkylaminoalkylreste der Formel 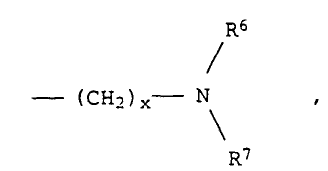 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann, und x eine ganze Zahl von mindestens 3 ist,
- R³: eine C₂- bis C₄-Alkylengruppe;
- y: null oder eine ganze Zahl von 1 bis 3 und
- R⁴: Wasserstoff oder einen C₁- bis C₄-Alkylrest mit der Maßgabe, daß für y gleich null R⁴ Wasserstoff ist.

Gegenstände der Erfindung sind ferner ein Verfahren zur Herstellung der hochreaktiven Polyoxyalkylen-polyole gemäß Anspruch 7 und ihre Verwendung zur Herstellung von kompakten oder zelligen, flexiblen Polyisocyanat-Polyadditionsprodukten nach Anspruch 9.

Die erfindungsgemäßen Polyoxyalkylen-polyole besitzen auch bei hohen Molekulargewichten, d.h. bei Molekulargewichten von 2 000 und darüber, noch ihre volle Katalysatoraktivität, da die katalytisch wirksamen tertiären Aminogruppen nicht wie bei mit Ammoniak oder primären Aminen gestarteten Polyoxyalkylen-polyolen in die Polyoxyalkylenkette eingebaut werden, sondern über ein ausreichend großes Brückenglied, eine sogenannte Spacerbrücke, von den Zentren mit reaktiven Wasserstoffatomen getrennt im Molekül gebunden sind. Polyoxyalkylen-polyole dieser Art mit spacerständig gebundenen tertiären Aminogruppen sind katalytisch äußerst wirksam, so daß selbst Polyoxypropylen-polyoxyethylen-polyole mit einem für PU-Weichschaum-polyoxyalkylen-polyole sehr niedrigen Gehalt an Ethylenoxideinheiten im Endblock von nur 5 Gew.-% ohne Zusatz von niedermolekularen tertiären Aminen als Katalysator problemlos verarbeitet werden können.

Die erfindungsgemäßen Polyoxyalkylen-polyole, vorzugsweise Polyoxypropylen-polyole, Polyoxyethylen-polyole und insbesondere Polyoxypropylen-polyoxyethylen-polyole, besitzen eine Funktionalität von mindestens 2, vorzugsweise von 2 bis 4 und insbesondere von 2 bis 3 und ein Molekulargewicht von 2 000 bis 10 000, vorzugsweise 2 400 bis 6 200 und insbesondere von 2 800 bis 4 200 und werden hergestellt, wie bereits ausgeführt wurde, durch Oxalkylierung des oben beschriebenen Startermoleküls, das mindestens eine, über eine Spacerbrücke gebundene tertiäre Aminogruppe gebunden enthält, mit mindestens einem Alkylenoxid.

Als zur Oxalkylierung geeignete Substituenten mit reaktiven Wasserstoffatomen im Startermolekül seien beispielshaft genannt die Thiol-, Carboxyl-, sekundäre Amino- und vorzugsweise die Hydroxyl- und insbesondere die primäre Aminogruppe.

Als tertiäre Aminogruppen finden beispielsweise die nachfolgend beschriebenen Gruppen Verwendung.

Als Startermoleküle sind insbesondere Verbindungen der Formel 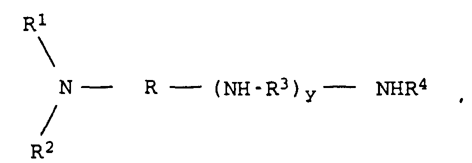 geeignet, in der bedeuten
- R: eine Spacerbrücke, die ein Alkylenrest mit mindestens 3 Kohlenstoffatomen ist,
- R¹ und R²: gleiche oder verschiedene, lineare oder verzweigte C₁- bis C₄-Alkylreste,
beide Reste gemeinsam einen C₄- bis C₆-Cycloalkylenrest, der anstelle einer Methylengruppe ein -O- oder -NR⁵- Brückenglied enthalten kann, in dem R⁵ ein C₁- bis C₄-Alkylrest ist, oder
gleiche oder verschiedene Dialkylaminoalkylreste der Formel 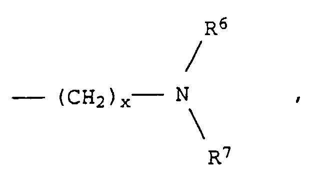 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann, und x eine ganze Zahl von mindestens 3 ist,
- R³: eine C₂- bis C₄-Alkylengruppe,
- y: null oder eine ganze Zahl von 1 bis 3 und
- R⁴: Wasserstoff oder einen C₁- bis C₄-Alkylrest mit der Maßgabe, daß für y gleich null R⁴ Wasserstoff ist.

Beispielhaft genannt seien als Reste R¹, R², R⁴, R⁵, R⁶ und R⁷ der Ethyl-, n-Propyl-, iso-Propyl, n-Butyl-, sekundär Butyl- und vorzugsweise der Methylrest. Beispiele für katalytisch wirksame Reste, welche mindestens eine tertiäre Aminogruppe enthalten, sind somit im einfachsten und bevorzugten Fall die Dialkylaminogruppe, insbesondere die Dimethylaminogruppe. Geeignet sind jedoch auch tertiäre Aminogruppen mit cyclischen Strukturen wie z.B. 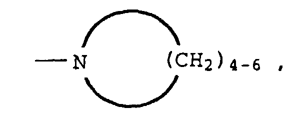 vorzugsweise 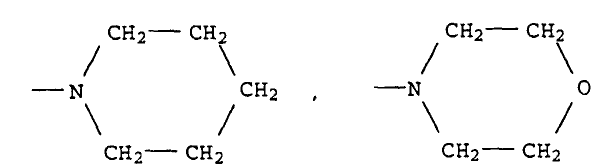 und 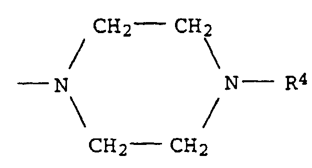 oder mit zusätzlichen Dialkylaminoalkylgruppen substituierte tertiäre Amine, die z.B. folgende Struktur besitzen können:

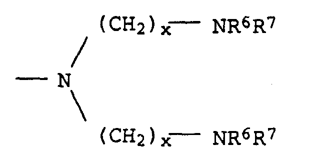

Als Spacerbrücken R vorzüglich geeignet sind und daher insbesondere verwendet werden Alkylenreste mit mindestens 3 Kohlenstoffatomen, vorzugsweise 3 bis 6 Kohlenstoffatomen und insbesondere 3 oder 4 Kohlenstoffatomen, wobei der Alkylenrest gegebenenfalls Ether- oder Thioetherbrücken gebunden enthalten kann.

Die Spacerbrücke besteht insbesondere aus einem n-Propylen- oder n-Butylenrest.

Als Startermoleküle zur Herstellung der erfindungsgemäßen hochreaktiven Polyoxyalkylen-polyole finden somit insbesondere Verwendung: N,N-Dimethyl-diaminopropan-1,3, N,N-Dimethyl-diaminobutan-1,4 und N,N-Dimethyldipropylen-triamin.

Zusätzlich zu den als Alkylenoxide bereits genannten und bevorzugt verwendeten Ethylenoxid, 1,2-Propylenoxid und Mischungen aus Ethylenoxid und 1,2-Propylenoxid sind z.B. ferner 1,2- bzw. 2,3-Butylenoxid geeignet. Die Alkylenoxide können zur Oxalkylierung einzeln, alternierend nacheinander oder als Mischung verwendet werden.

Die Herstellung der erfindungsgemäßen Polyoxyalkylen-polyole kann nach an sich bekannten Methoden durchgeführt werden. Nach einer bevorzugten Ausführungsform werden die erfindungsgemäß verwendbaren Startermoleküle in 2 oder noch mehreren Reaktionsstufen oxalkyliert, wobei in der 1. Reaktionsstufe die Oxalkylierung vorzugsweise katalysatorfrei, zweckmäßigerweise bei Atmosphärendruck bei 90 bis 150°C, vorzugsweise 100 bis 130°C, durchgeführt wird. Nach Absättigung der reaktiven Wasserstoffatome des Startermoleküls durch Alkylenoxid wird in der 2. und gegebenenfalls den folgenden Reaktionsstufen die anionische Polymerisation der Alkylenoxide in Gegenwart von Alkalihydroxiden, wie z.B. Natrium- oder Kaliumhydroxid, oder Alkalialkoholaten, wie z.B. Natriummethylat, Natrium- oder Kaliumethylat, Kaliumisopropylat oder Natriumbutylat, als Katalysatoren zu Ende geführt. Die Hydroxylgruppen der mit Alkylenoxid gesättigten Startermoleküle werden hierzu partiell in die entsprechenden Alkoholate übergeführt. Je nach verwendetem Katalysator wird dabei gegebenenfalls gebildetes Wasser oder der gegebenenfalls gebildete niedersiedende Alkohol abdestilliert und bei Temperaturen von 90 bis 150°C, vorzugsweise von 100 bis 130°C, das Alkylenoxid oder die Alkylenoxidmischung im Maße ihres Abreagierens, beispielsweise in 4 bis 30 Stunden, vorzugsweise in 6 bis 12 Stunden, bei Atmosphärendruck oder gegebenenfalls unter erhöhtem Druck bei 1,1 bis 20 bar, vorzugsweise 1,1 bis 7 bar, in das Reaktionsmedium eingetragen. Nach Beendigung der Oxalkylierung oder bei der Herstellung von Polyoxyalkylenblock-polyolen nach der Bildung jedes Alkylenoxidblocks wird das überschüssige Alkylenoxid bei einer Temperatur im Bereich von 90 bis 150°C unter vermindertem Druck, z.B. bei 0,01 bis 20 mbar, vorzugsweise 0,1 bis 10 mbar, abdestilliert.

Die hergestellten, vorzugsweise Alkaliionen enthaltenden Polyoxyalkylen-polyole werden zweckmäßigerweise durch Zugabe von organischen Säuren, wie z.B. Zitronensäure, Essigsäure, Ameisensäure u.a., oder anorganischen Säuren, wie z.B. Schwefelsäure, Phosphorsäure oder Kohlensäure, sowie gegebenenfalls von Adsorptionsmitteln nach bekannten Methoden gereinigt.

Die erfindungsgemäßen, hochreaktiven Polyoxyalkylen-polyole finden vorzugsweise Verwendung zur Herstellung von kompakten oder vorzugsweise zelligen, flexiblen Polyisocyanat-Polyadditionsprodukten, insbesondere von elastischen PU-Weichschaumstoffen, die in Abwesenheit von flüchtigen tertiären Aminen als Katalysatoren und ohne Zusatz von fluorchlorkohlenwasserstoffhaltigen Treibmitteln hergestellt werden können.

Zur Herstellung der flexiblen, kompakten oder zelligen Polyisocyanat-Polyadditionsprodukte, vorzugsweise der elastischen PU-Weichschaumstoffe, können die erfindungsgemäßen hochreaktiven Polyoxyalkylen-polyole als einzige Polyhydroxylverbindung (a) verwendet werden. Zur Modifizierung der mechanischen Eigenschaften der Polyisocyanat-Polyadditionsprodukte oder aus verarbeitungstechnischen Gründen, kann es jedoch zweckmäßig sein, als Polyhydroxylverbindungen a) Mischungen zu verwenden, die enthalten oder vorzugsweise bestehen, bezogen auf das Gesamtgewicht, aus
ai) mindestens 10 Gew.-%, vorzugsweise mindestens 25 Gew.-% und insbesondere mindestens 50 Gew.-%, mindestens eines erfindungsgemäßen hochreaktiven Polyoxyalkylen-polyols und
aii) maximal 90 Gew.-%, vorzugsweise maximal 75 Gew.-% und insbesondere maximal 50 Gew.-%, mindestens eines Polyoxyalkylen-polyols mit einer Funktionalität von 2 bis 8 und einem Molekulargewicht von 500 bis 8 000, wobei zur Herstellung von elastischen Polyisocyanat-Polyadditionsprodukten Polyoxyalkylen-polyole mit einer Funktionalität von 2 bis 3 und einem Molekulargewicht von 2 800 bis 6 200, zur Herstellung von halbharten Polyisocyanat-Polyadditionsprodukten Polyoxyalkylen-polyole mit einer Funktionalität von 3 bis 4 und einem Molekulargewicht von 1 100 bis 3 000 und zur Herstellung von harten Polyisocyanat-polyadditionsprodukten Polyoxyalkylen-polyole mit einer Funktionalität von 3 bis 6 und einem Molekulargewicht von 500 bis 1 500 bevorzugt Anwendung finden.

Derartige Polyoxyalkylen-polyolmischungen aus (ai) und (aii) sind ausreichend katalytisch wirksam, so daß auf den Zusatz flüchtiger tertiärer Aminkatalysatoren ebenfalls im wesentlichen vollständig verzichtet werden kann.

Die hierfür geeigneten Polyoxyalkylen-polyole (aii) können nach bekannten Verfahren, beispielsweise nach der oben beschriebenen anionischen Polymerisation in Gegenwart von basischen Katalysatoren und unter Verwendung von di- bis octafunktionellen Startermolekülen oder durch kationische Polymerisation mit Lewis-Säuren, wie Antimonpentachlorid, Bortrifluorid-Etherat u.a., oder Bleicherde als Katalysatoren aus einem oder mehreren Alkylenoxiden mit 2 bis 4 Kohlenstoffatomen im Alkylenrest, beispielsweise Tetrahydrofuran, 1,3-Propylenoxid, 1,2- bzw. 2,3-Butylenoxid, Styroloxid und Epichlorhydrin und vorzugsweise Ethylenoxid und/oder 1,2-Propylenoxid, hergestellt werden. Die Alkylenoxide können ebenfalls einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'- dialkylsubstituierte Diamine mit 1 bis 4 Kohlenstoffatomen im Alkylrest, wie gegebenenfalls mono- und dialkylsubstituiertes Ethylendiamin, Diethyltriamin, Triethylentetraamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4-, 2,6-Toluylendiamin und 4,4'-, 2,4'- und 2,2'-Diamino-diphenylmethan.

Als Startermoleküle kommen ferner in Betracht: Alkanolamine, wie Ethanolamin, Diethyanolamin, N-Methyl- und N-Ethylethanolamin, N-Methyl- und N-Ethyl-diethanolamin und Triethanolamin, und Ammoniak.

Vorzugsweise verwendet werden mehrwertige, insbesondere drei- und/oder höherwertige Alkohole oder Oxyalkylenglykole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Sucrose.

Als Polyoxyalkylen-polyole (aii) eignen sich ferner Melamin-Polyether-polylol-Dispersionen gemäß EP-A-23 987 (US-A-4 293 657), Polymer-Polyether-polyol-Dispersionen, hergestellt aus Polyepoxiden und Epoxidharzhärtern in Gegenwart von Polyether-polyolen gemäß DE-A-29 43 689 (US-A-4 305 861), Dispersionen von aromatischen Polyestern in Polyhydroxylverbindungen gemäß EP-A-62 204 (US-A-4 435 537) oder DE-A-33 00 474, Dispersionen von organischen und/oder anorganischen Füllstoffen in Polyhydroxylverbindungen gemäß EP-A-11 751 (US-A-4 243 755), Polyharnstoff-Polyether-polyol-Dispersionen gemäß DE-A-31 25 402, Tris-(hydroxyalkyl)isocyanurat-Polyether-polyol-Dispersionen gemäß EP-A-136 571 (US-A-4 514 526) und Kristallitsuspension gemäß DE-A-33 42 176 und DE-A-33 42 177 (US-A-4 560 708), wobei die Ausführungen in den genannten Patentveröffentlichungen als Bestandteil der Patentbeschreibung zu betrachten sind.

Anstelle der vorgenannten Polyoxyalkylen-polyole (aii) oder in Verbindungen mit diesen, kann es zur Modifikation der mechanischen Eigenschaften der Polyisocyanat-Polyadditionsprodukte, vorzugsweise der PU-Weichschaumstoffe, gegebenenfalls zweckmäßig sein zu ihrer Herstellung zusätzlich niedermolekulare Kettenverlängerungsmittel (b) mitzuverwenden.

Als geeignete Kettenverlängerungsmittel (b) kommen polyfunktionelle, insbesondere di- und trifunktionelle Verbindungen mit Molekulargewichten von 18 bis ungefähr 400, vorzugsweise von 62 bis ungefähr 300, in Betracht. Verwendet werden beispielsweise Di- und/oder Trialkanolamine, wie z.B. Diethanolamin und Triethanolamin, aliphatische Diole und/oder Triole mit 2 bis 6 Kohlenstoffatomen im Alkylenrest, wie z.B. Ethan-, 1,4-Butan-, 1,5-Pentan-, 1,6-Hexandiol, Glycerin und/oder Trimethylolpropan, und niedermolekulare Ethoxylierungs- und/oder Propoxylierungsprodukte, hergestellt aus den vorgenannten Di-, Trialkanolaminen, Diolen und/oder Triolen sowie aliphatischen und/oder aromatischen Diaminen, wie z.B. 1,2-Ethan-, 1,4-Butan-, 1,6-Hexandiamin, 2,3-, 2,4- und/oder 2,6-Toluylen-diamin, 4,4'-Diamino-diphenylmethan, 3,3'-di- und/oder 3,3',5,5'-tetraalkyl- substituierten 4,4'-Diaminodiphenylmethanen, als Startermolekülen und Alkylenoxid oder -gemischen.

Als Kettenverlängerungsmittel (b) vorzugsweise eingesetzt werden Dialkanolamine, Diole und/oder Triole und inbesondere Hexandiol-1,6, Diethanolamin, Trimethylolpropan und Glycerin oder Mischungen davon.

Die Kettenverlängerungsmittel (b), die vorzugsweise zur Herstellung der PU-Weichschaumstoffe mitverwendet werden, kommen zweckmäßigerweise in solchen Gewichtsmengen zur Anwendung, daß pro Mol Polyoxyalkylen-polyol oder Polyoxyalkylen-polyolmischungen (a) 0,01 bis 8 Mole, insbesondere 0,1 bis 3 Mole, Kettenverlängerungsmittel (b) in der Reaktionsmischung vorliegen.

Zur Herstellung der Polyisocyanat-polyadditionsprodukte, vorzugsweise der PU-Weichschaumstoffe, eignen sich die bekannten organischen, z.B. aliphatischen, cycloaliphatischen und vorzugsweise aromatischen Di- und/oder Polyisocyanate (c). Im einzelnen seien als aromatischen Polyisocyanate beispielhaft genannt: Mischungen aus 4,4'- und 2,4'-Diphenylmethan-diisocyanat (MDI), Mischungen aus MDI und Polyphenyl-polymethylen-polyisocyanaten (Roh-MDI) mit einem Gehalt an MDI-Isomeren von zweckmäßigerweise mindestens 35 Gew.-%, vorzugsweise von 50 bis 90 Gew.-% und mehr, bezogen auf das Gesamtgewicht der Mischung, 2,4- und 2,6-Toluylen-diisocyanat sowie die entsprechenden handelsüblichen Isomerenmischungen, Mischungen aus Toluylen-diisocyanaten und MDI und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.

Geeignet sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-%, oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus Toluylen-diisocyanaten insbesondere einen NCO-Gehalt von 34 bis 28 Gew.-% und solche aus 4,4'-MDI, 4,4'- und 2,4'-MDI-Isomerenmischungen oder Roh-MDI insbesondere einen NCO-Gehalt von 28 bis 22 Gew.-%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6 000, vorzugsweise von 134 bis 4 200, mit Toluylen-diisocyanaten, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder Toluylen-diisocyanat-Basis.

Besonders bewährt haben sich jedoch und daher vorzugsweise Anwendung finden Mischungen aus 4,4'- und 2,4'-MDI, Roh-MDI mit einem Gehalt an MDI von mindestens 35 Gew.-%, bezogen auf das Gesamtgewicht, Mischungen aus 4,4'- und 2,4'-MDI und Gemischen aus 2,4- und 2,6-TDI, Mischungen aus Roh-MDI und Gemischen aus 2,4- und 2,6-TDI, Urethangruppen enthaltende Polyisocyanatmischungen mit einem NCO-Gehalt von 28 bis 14 Gew.-%, bezogen auf das Gesamtgewicht, auf der Grundlage von MDI und/oder Roh-MDI.

Zur Beschleunigung der Umsetzung der hochreaktiven Polyoxyalkylen-polyole, Polyoxyalkylen-polyolmischungen aus (ai) und (aii) oder vorzugsweise Mischungen aus (ai) oder (ai) und (aii), Wasser als Treibmittel (e) und gegebenenfalls Kettenverlängerungsmittel (b) mit den organischen Polyisocyanaten und/oder modifizierten Polyisocyanaten (c) können der Reaktionsmischung zusätzlich synergistisch wirkende Katalysatoren (d) einverleibt werden. Hierfür vorzüglich geeignet sind Metallsalze, wie Eisen(II)-chlorid, Zinkchlorid, Bleioctat und vorzugsweise Zinnsalze, wie Zinndioctoat, Zinndiethylhexoat und Dibutylzinndilaurat, die üblicherweise in einer Menge von 0,01 bis 0,5 Gew.-%, vorzugsweise 0,03 bis 0,25 Gew.-%, Metallsalze, bezogen auf das Gewicht der Polyoxyalkylen-polyole oder -mischungen (a), eingesetzt werden.

Zu Treibmitteln (e), welche zur Herstellung der zelligen Polyisocyanat-Polyadditionsprodukte, vorzugsweise der PU-Weichschaumstoffe, verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyoxyalkylen-polyole oder -mischungen (a).

Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (c) inert sind und Siedepunkte unter 100°C, vorzugsweise unter 50°C, insbesondere zwischen -50°C und 30°C, bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, vorzugsweise technische Gemische aus n- und iso-Pentanen, n- und iso-Butan und Propan, Ether, wie Furan, Dimethylether und Diethylether, Ketone, wie Aceton und Methylethylketon, Carbonsäurealkylester, wie Methylformiat, Dimethyloxalat und Ethylacetat, und halogenierte Kohlenwasserstoffe, wie Methylenchlorid, Dichlormonofluormethan, Difluormethan, Difluorchlormethan, Trifluormethan, Difluorethan, Tetrafluorethan, Heptafluorpropan, l-Chlor-2,2-difluorethan (142), 1-Chlor-1,1-difluorethan (142b) und 1-Chlor-1,2-difluorethan (142a). Auch Gemische dieser niedrigsiedenden Flüssigkeiten untereinander, z.B. aus Difluorchlormethan und 142b, und/ oder mit anderen substituierten oder unsubstituierten Kohlenwasserstoffen können verwendet werden. Geeignet als Treibmittel sind ferner organische Carbonsäuren, wie z.B. Ameisensäure, Essigsäure, Oxalsäure, Ricinolsäure und carboxylgruppenhaltige Verbindungen.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile, pro 100 Gew.-Teile der Polyoxyalkylen-polyole oder -mischungen (a). Gegebenenfalls kann es zweckmäßig sein, die gegebenenfalls modifizierten Polyisocyanate (c) mit dem inerten physikalisch wirkenden Treibmittel zu mischen und dadurch die Viskosität zu verringern.

Der Reaktionsmischung zur Herstellung der Polyisocyanat-polyadditionsprodukte, vorzugsweise der PU-Weichschaumstoffe, können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxyalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyoxyalkylen-polyole oder -mischungen (a), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe, wie silikatische Mineralien, beispielsweise Schichtsilikate, wie Antigorit, Serpentin, Hornblenden, Amphibole, Chrisotil, Zeolithe, Talkum; Metalloxide, wie Kaolin, Aluminiumoxide, Aluminiumsilikat, Titanoxide und Eisenoxide, Metallsalze, wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin, oder Mischungen aus mindestens zwei Flammschutzmitteln, wie z.B. Ammoniumpolyphosphaten und Melamin, sowie gegebenenfalls Stärke zum Flammfestmachen der erfindungsgemäß hergestellten Polyisocyanat-Polyadditionsprodukte, vorzugsweise PU-Weichschaumstoffe, verwendet werden. Im allgemeinen hat es sich als zweckmäßig erwiesen, 5 bis 50 Gew.-Teile, vorzugsweise 5 bis 25 Gew.-Teile, der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der Polyisocyanat-Polyadditionsprodukte, vorzugsweise der PU-Weichschaumstoffe, werden die organischen, gegebenenfalls modifizierten Polyisocyanate (c), die Polyoxyalkylen-polyole oder -mischungen (a) und gegebenenfalls Kettenverlängerungsmittel (b) in Gegenwart von gegebenenfalls Katalysatoren (d), gegebenenfalls Treibmitteln (e), und gegebenenfalls Hilfsmitteln und/oder Zusatzstoffen (f) bei Temperaturen von 0 bis 100°C, vorzugsweise 15 bis 80°C, in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an die Ausgangskomponenten (a) und gegebenenfalls (b) vorliegen. Das Molverhältnis von Äquivalente Wasser zu Äquivalente NCO-Gruppe beträgt vorteilhafterweise 0,5 bis 5:1, vorzugsweise 0,7 bis 0,95:1 und insbesondere 0,75 bis 0,85:1. Zur Herstellung von Isocyanuratgruppen enthaltenden Polyisocyanat-Polyadditionsprodukten beträgt das Verhältnis von NCO-Gruppe zu reaktivem Wasserstoffatom zweckmäßigerweise 2 bis 25:1, vorzugsweise 2 bis 10:1.

Die Polyisocyanat-Polyadditionsprodukte, vorzugsweise die PU-Weichschaumstoffe, werden zweckmäßigerweise nach dem one shot-Verfahren durch Vermischen von zwei Komponenten A und B hergestellt, wobei die Ausgangskomponenten (a), (d), (e) und gegebenenfalls (b) und (f) zu der sogenannten A-Komponente vereinigt und als B-Komponente die Ausgangskomponente (c) gegebenenfalls im Gemisch mit (f) und inerten, physikalisch wirkenden Treibmitteln verwendet werden. Die A- und B-Komponenten müssen vor Herstellung der Polyisocyanat-Polyadditionsprodukte, vorzugsweise der PU-weichschaumstoffe, nur noch intensiv gemischt werden. Die Reaktionsmischung kann in offenen oder geschlossenen Formwerkzeugen verschäumt und ausgehärtet oder zu kompakten Formkörpern umgesetzt werden.

Das erfindungsgemäße Verfahren eignet sich insbesondere auch zur Herstellung von PU-Weichformschaumstoffen. Die Reaktionsmischung wird hierzu mit einer Temperatur von 15 bis 80°C, vorzugsweise 30 bis 65°C, in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z.B. bei Verdichtungsgraden von 1,1 bis 8, vorzugsweise von 2 bis 6 und insbesondere 2,2 bis 4, in dem geschlossenen Formwerkzeug aushärten.

Die aus den erfindungsgemäßen hochreaktiven Polyoxyalkylen-polyolen (ai) oder Mischungen aus (ai) und konventionellen Polyoxyalkylen-polyolen (aii) hergestellten zelligen oder kompakten Formkörper aus Polyisocyanat-Polyadditionsprodukten sind sehr gut entformbar, besitzen eine verbesserte Oberfläche und weisen keinerlei Geruchsprobleme auf. Kompakte Formkörper weisen im Vergleich zu Produkten aus konventionellen Polyoxyalkylen-polyolen eine geringere Shore-Härte auf. Die zelligen PU-Elastomeren und PU-Schaumstoffe, vorzugsweise PU-Weichschaumstoffe, enthalten keine Fluorchlorkohlenwasserstoffe als Zellgas.

Die zelligen PU-Elastomeren besitzen Dichten von ungefähr 0,76 bis 1,0 g/cm³, vorzugsweise von 0,9 bis 1,0 g/cm³, wobei die Dichte von füllstoffhaltigen Produkten höhere Werte, z.B. bis 1,4 g/cm³ und mehr, erreichen kann. Formkörper aus derartigen zelligen Elastomeren finden Verwendung in der Automobilindustrie, beispielsweise als Kopfstützen, Außenteile, wie z.B. Heckspoiler und Stoßfänger, und Innenauskleidungen sowie als Schuhsohlen.

Die hergestellten harten, halbharten und vorzugsweise weichen, flexiblen PU-Schaumstoffe sowie die entsprechenden Integralschaumstoffe weisen eine Dichte von 0,02 bis 0,75 g/cm³ auf, wobei die Dichte der Schaumstoffe vorzugsweise 0,025 bis 0,24 g/cm³ und insbesondere 0,03 bis 0,1 g/cm³ und die Dichte der Intetralschaumstoffe vorzugsweise 0,08 bis 0,75 g/cm³ und insbesondere 0,24 bis 0,6 g/cm³ betragen. Die Schaumstoffe und Integralschaumstoffe werden z.B. verwendet in der Fahrzeug-, z.B. Automobil-, Flugzeug- und Schiffbauindustrie, der Möbel und Sportartikelindustrie als beispielsweise Polstermaterialien, Gehäuseteile, Skiinnenschuh, Skikern u.a. Besonders eignen sie sich als Isolationsmaterial im Bau- und Kühlschranksektor, z.B. als Zwischenschicht für Sandwichelemente oder zum Ausschäumen von Kühlschrank- und Kühltruhengehäusen.

### Beispiele

### Herstellung von Polyoxypropylen-polyoxyethylen-polyolen

### Beispiel 1

Herstellung eines mit N,N-Dimethyl-1,3-propandiamin gestarteten Polyoxypropylen-polyoxyethylen-polyols mit 21 Gew.-% Ethylenoxideinheiten, bezogen auf das Gewicht der Alkylenoxideinheiten, im Ethylenoxidendblock.

138 g N,N-Dimethyl-1,3-propandiamin wurden unter einer Stickstoffatmosphäre in einem 10 l Rührautoklaven auf 105°C erwärmt und hierzu 157 g 1,2-Propylenoxid gegeben. Nach Abreaktion des 1,2-Propylenoxids und Absättigung der primären Aminogruppe wurden 34,8 g 45 gew.-%ige wäßrige Kaliumhydroxidlösung hinzugefügt und bei einer Temperatur von 105°C und einem verminderten Druck von 1 mbar über einen Zeitraum von 2 Stunden das Alkoholat gebildet.

Anschließend wurden bei 105°C 3 957 g 1,2-Propylenoxid innerhalb 6 Stunden zugegeben. Nach einer Abreaktionsphase von 3 Stunden wurde unter einem verminderten Druck von 1 mbar 15 Minuten bei 105°C entgast, der Rückautoklav mit Stickstoff bis zu einem Druck von 2,5 bar gefüllt und 971 g Ethylenoxid innerhalb 2 Stunden bei 105°C zudosiert. Nach einer Abreaktionszeit von 1 Stunde wurde zur Entfernung des restlichen Ethylenoxids bei 1 mbar und 105°C entgast.

Zur Entfernung des Katalysators wurde das Polyoxypropylen-polyoxyethylen-polyol mit 200 g synthetischem Magnesiumsilikat und 50 g Wasser verrührt und die Feststoffe durch Druckfiltration abgetrennt. Nach anschließender Abdestillation des Reaktionswassers bei 100°C, 1 mbar in 2 Stunden wurden dem Polyoxypropylen-polyoxyethylen-polyol 1 500 ppm Di-tert.-butyl-p-kresol zur Stabilisierung einverleibt.

Das erhaltene Polyoxypropylen-polyoxyethylen-polyol besaß eine Hydroxylzahl von 36, entsprechend einem Molekulargewicht von ungefähr 3 120, eine Viskosität von 520 mPa · s bei 25°C, einen pH-Wert von 11,5 und einen Restwassergehalt von 0,01 Gew.-%.

### Beispiel 2

Herstellung eines mit N,N-Dimethyl-1,4-butandiamin gestarteten Polyoxypropylen-polyoxyethylen-polyols mit 21 Gew.-% Ethylenoxideinheiten, bezogen auf das Gewicht der Alkylenoxideinheiten, im Ethylenoxidendblock.

89 g N,N-Dimethyl-1,4-butandiamin wurden unter einer Stickstoffatmosphäre in einem 10 1 Rührautoklaven von auf 105°C erwärmt und hierzu 90 g 1,2-Propylenoxid gegeben. Nach Abreaktion des 1,2-Propylenoxids und Absättigung der primären Aminogruppe wurden 20 g 45 gew.-%ige wäßrige Kaliumhydroxidlösung hinzugefügt und bei einer Temperatur von 105°C und einem verminderten Druck von 1 mbar über einen Zeitraum von 2 Stunden das Alkoholat gebildet.

Anschließend wurden bei 105°C 2 246 g 1,2-Propylenoxid innerhalb 6 Stunden zugegeben. Nach einer Abreaktionsphase von 3 Stunden wurde unter einem verminderten Druck von 1 mbar 15 Minuten bei 105°C entgast, der Rückautoklav mit Stickstoff bis zu einem Druck von 2,5 bar gefüllt und 554 g Ethylenoxid innerhalb 2 Stunden bei 105°C zudosiert. Nach einer Abreaktionszeit von 1 Stunde wurde zur Entfernung des restlichen Ethylenoxids bei 1 mbar und 105°C entgast.

Zur Entfernung des Katalysators wurde das Polyoxypropylen-polyoxyethylen-polyol mit 120 g synthetischem Magnesiumsilikat und 40 g Wasser verrührt und die Feststoffe durch Druckfiltration abgetrennt. Nach anschließender Abdestillation des Reaktionswassers bei 100°C, 1 mbar in 2 Stunden wurden dem Polyoxypropylen-polyoxyethylen-polyol 1 500 ppm Di-tert.-butyl-p-kresol zur Stabilisierung einverleibt.

Das erhaltene Polyoxypropylen-polyoxyethylen-polyol besaß eine Hydroxylzahl von 33, entsprechend einem Molekulargewicht von ungefähr 3 400, eine Viskosität von 670 mPa s bei 25°C, einen pH-Wert von 10,7 und einen Restwassergehalt von 0,02 Gew.-%.

### Beispiel 3

Herstellung eines mit N,N-Dimethyldipropylenentriamin gestarteten Polyoxypropylen-polyoxyethylen-polyols mit 21 Gew.-% Ethylenoxideinheiten, bezogen auf das Gewicht der Alkylenoxideinheiten, im Ethylenoxidendblock.

114 g N,N-Dimethyl-dipropylentriamin wurden unter einer Stickstoffatmosphäre in einem 10 1 Rührautoklaven auf 105°C erwärmt und hierzu 125 g 1,2-Propylenoxid gegeben. Nach Abreaktion des 1,2-Propylenoxids und Absättigung der primären und sekundären Aminogruppen wurden 33,1 g 45 gew.-%ige wäßrige Kaliumhydroxidlösung hinzugefügt und bei einer Temperatur von 105°C und einem verminderten Druck von 1 mbar über einen Zeitraum von 2 Stunden das Alkoholat gebildet.

Anschließend wurden bei 105°C 4 140 g 1,2-Propylenoxid innerhalb 6 Stunden zugegeben. Nach einer Abreaktionsphase von 3 Stunden wurde unter einem verminderten Druck von 1 mbar 15 Minuten bei 105°C entgast, der Rückautoklav mit Stickstoff bis zu einem Druck von 2,5 bar gefüllt und 1 159 g Ethylenoxid innerhalb 2 Stunden bei 105°C zudosiert. Nach einer Abreaktionszeit von 1 Stunde wurde zur Entfernung des restlichen Ethylenoxids bei 1 mbar und 105°C 30 Minuten lang entgast.

Zur Entfernung des Katalysators wurde das Polyoxypropylen-polyoxyethylen-polyol mit 200 g synthetischem Magnesiumsilikat und 50 g Wasser verrührt und die Feststoffe durch Druckfiltration abgetrennt. Nach anschließender Abdestillation des Reaktionswassers bei 100°C, 1 mbar in 2 Stunden wurden dem Polyoxypropylen-polyoxyethylen-polyol 1 500 ppm Ditert.-butyl-p-kresol zur Stabilisierung einverleibt.

Das erhaltene Polyoxypropylen-polyoxyethylen-polyol besaß eine Hydroxylzahl von 29,5, entsprechend einem Molekulargewicht von ungefähr 5 700, eine Viskosität von 1 210 mPa · s bei 25°C, einen pH-Wert von 11,3 und einen Restwassergehalt von 0,03 Gew.-%.

### Beispiel 4

Herstellung eines mit N,N-Dimethyldipropylenentriamin gestarteten Polyoxypropylen-polyoxyethylen-polyols mit 5 Gew.-% Ethylenoxideinheiten, bezogen auf das Gewicht der Alkylenoxideinheiten, im Ethylenoxidendblock.

103 g N,N-Dimethyl-dipropylentriamin wurden unter einer Stickstoffatmosphäre in einem 10 l Rührautoklaven auf 105°C erwärmt und hierzu 113 g 1,2-Propylenoxid gegeben. Nach Abreaktion des 1,2-Propylenoxids und Absättigung der primären und sekundären Aminogruppen wurden 37,4 g 45 gew.-%ige wäßrige Kaliumhydroxidlösung hinzugefügt und bei einer Temperatur von 105°C und einem verminderten Druck von 1 mbar über einen Zeitraum von 2 Stunden das Alkoholat gebildet.

Anschließend wurden bei 105°C 5 110 g 1,2-Propylenoxid innerhalb 6 Stunden zugegeben. Nach einer Abreaktionsphase von 3 Stunden wurde unter einem verminderten Druck von 1 mbar 15 Minuten bei 105°C entgast, der Rückautoklav mit Stickstoff bis zu einem Druck von 2,5 bar gefüllt und 280 g Ethylenoxid innerhalb 2 Stunden bei 105°C zudosiert. Nach einer Abreaktionszeit von 1 Stunde wurde zur Entfernung des restlichen Ethylenoxids bei 1 mbar und 105°C entgast.

Zur Entfernung des Katalysators wurde das Polyoxypropylen-polyoxyethylen-polyol mit 200 g synthetischem Magnesiumsilikat und 50 g Wasser verrührt und die Feststoffe durch Druckfiltration abgetrennt. Nach anschließender Abdestillation des Reaktionswassers bei 100°C, 1 mbar in 2 Stunden wurden dem Polyoxypropylen-polyoxyethylen-polyol 1 500 ppm Di-tert.-butyl-p-kresol zur Stabilisierung einverleibt.

Das erhaltene Polyoxypropylen-polyoxyethylen-polyol besaß eine Hydroxylzahl von 29, entsprechend einem Molekulargewicht von ungefähr 5 800, eine Viskosität von 1 100 mPa·s bei 25°C, einen pH-Wert von 10,7 und einen Restwassergehalt von 0,02 Gew.-%.

### Beispiel 5

Herstellung eines mit N,N-Dimethyldipropylenentriamin gestarteten Polyoxypropylen-polyoxyethylen-polyols mit 5 Gew.-% Ethylenoxideinheiten, bezogen auf das Gewicht der Alkylenoxideinheiten, im Ethylenoxidendblock.

Man verfuhr analog den Angaben des Beispiels 4, verwendete jedoch die Einsatzstoffe in folgenden Mengen:

| | |
|---|---|
| 155,0 g | N,N-Dimethyl-dipropylentriamin, |
| 174,0 g | 1,2-Propylenoxid, |
| 37,5 g | 45 gew.-%ige wäßrige Kaliumhydroxidlösung, |
| 5 000,0 g | 1,2-Propylenoxid und |
| 280,0 g | Ethylenoxid |

Das erhaltene Polyoxypropylen-polyoxyethylen-polyol besaß eine Hydroxylzahl von 38, entsprechend einem Molekulargewicht von ungefähr 4 430, eine Viskosität von 800 mPa · s bei 25°C, einen pH-Wert von 11,2 und einen Restwassergehalt von 0,02 Gew.-%.

### Vergleichsbeispiel I

Herstellung eines mit Piperazin gestarteten Polyoxypropylen-polyoxyethylen-polyols mit 21 Gew.-% Ethylenoxideinheiten, bezogen auf das Gewicht der Alkylenoxideinheiten, im Ethylenoxidendblock

843 g Piperazin wurden unter einer Stickstoffatmosphäre in einem 66 Rührautoklaven auf 100°C erwärmt und hierzu 654 g 1,2-Propylenoxid gegeben. Nach Abreaktion des 1,2-Propylenoxids und Absättigung der Aminogruppen wurden 416 g 45 gew.-%ige wäßrige Kaliumhydroxidlösung hinzugefügt und bei einer Temperatur von 100°C und einem verminderten Druck von 10 mbar über eine Zeitraum von 3 Stunden das Alkoholat gebildet.

Anschließend wurden bei 107°C 30 670 g 1,2-Propylenoxid innerhalb 8 Stunden zugegeben. Nach einer Abreaktionsphase von 3 Stunden wurde unter einem verminderten Druck von 10 mbar 30 Minuten bei 107°C entgast, der Rückautoklav mit Stickstoff bis zu einem Druck von 2,5 bar gefüllt und 7 830 g Ethylenoxid innerhalb 2 Stunden bei 107°C zudosiert.

Nach einer Abreaktionszeit von 1 Stunde wurde zur Entfernung des restlichen Ethylenoxids bei 10 mbar und 107°C entgast.

Zur Entfernung des Katalysators wurde das Polyoxypropylen-polyoxyethylen-polyol mit 1 200 g synthetischem Magnesiumsilikat und 600 g Wasser verrührt und die Feststoffe durch Druckfiltration abgetrennt. Nach anschließender Abdestillation des Reaktionswassers bei 100°C, 10 mbar in 4 Stunden wurden dem Polyoxypropylen-polyoxyethylen-polyol 1 500 ppm Di-tert.-butyl-p-kresol zur Stabilisierung einverleibt.

Das erhaltene Polyoxypropylen-polyoxyethylen-polyol besaß eine Hydroxylzahl von 27, entsprechend einem Molekulargewicht von ungefähr 4 150, eine Viskosität von 1 060 mPa·s bei 25°C, einen Restalkaligehalt von 2 ppm (spektroskopisch gemessen) und einen Restwassergehalt von 0,015 Gew.-%.

### Vergleichsbeispiel II

Herstellung eines mit Triethanolamin gestarteten Polyoxypropylen-polyoxyethylen-polyols mit 21 Gew.-% Ethylenoxideinheiten, bezogen auf das Gewicht der Alkylenoxideinheiten, im Ethylenoxidendblock

110 g Triethanolamin wurden unter einer Stickstoffatmosphäre in einem 10 1 Rührautoklaven auf 105°C erwärmt, hierzu 33,1 g 45 gew.-%ige wäßrige Kaliumhydroxidlösung gefügt und bei einer Temperatur von 90°C und einem verminderten Druck von 10 mbar über eine Zeitraum von 1 Stunde das Alkoholat gebildet.

Anschließend wurden bei 110°C 4 269 g 1,2-Propylenoxid innerhalb 6 Stunden zugegeben. Nach einer Abreaktionsphase von 3 Stunden wurde unter einem verminderten Druck von 1 mbar 15 Minuten bei 105°C entgast, der Rückautoklav mit Stickstoff bis zu einem Druck von 2,5 bar gefüllt und 1 159 g Ethylenoxid innerhalb 2 Stunden bei 110°C zudosiert. Nach einer Abreaktionszeit von 1 Stunde wurde zur Entfernung des restlichen Ethylenoxids bei 1 mbar und 110°C 30 Minuten lang entgast.

Zur Entfernung des Katalysators wurde das Polyoxypropylen-polyoxyethylen-polyol mit 200 g synthetischem Magnesiumsilikat und 50 g Wasser verrührt und die Feststoffe durch Druckfiltration abgetrennt. Nach anschließender Abdestillation des Reaktionswassers bei 100°C, 1 mbar in 2 Stunden wurden dem Polyoxypropylen-polyoxyethylen-polyol 1 500 ppm Ditert.-butyl-p-kresol zur Stabilisierung einverleibt.

Das erhaltene Polyoxypropylen-polyoxyethylen-polyol besaß eine Hydroxylzahl von 28, entsprechend einem Molekulargewicht von ungefähr 6 010, eine Viskosität von 1 130 mPa·s bei 25°C, einen pH-Wert von 10,7 und einen Restwassergehalt von 0,01 Gew.-%.

### Vergleichsbeispiel III

Herstellung eines mit Triethanolamin gestarteten Polyoxypropylen-polyoxyethylen-polyols mit 5 Gew.-% Ethylenoxideinheiten, bezogen auf das Gewicht der Alkylenoxideinheiten, im Ethylenoxidendblock

99,4 g Triethanolamin wurden unter einer Stickstoffatmosphäre in einem 10 1 Rührautoklaven auf 105°C erwärmt, hierzu 37,4 g 45 gew.-%ige wäßrige Kaliumhydroxidlösung gefügt und bei einer Temperatur von 90°C und einem verminderten Druck von 1 mbar über eine Zeitraum von 1 Stunde das Alkoholat gebildet.

Anschließend wurden bei 110°C 5 230 g 1,2-Propylenoxid innerhalb 6 Stunden zugegeben. Nach einer Abreaktionsphase von 3 Stunden wurde unter einem verminderten Druck von 1 mbar 15 Minuten bei 110°C entgast, der Rückautoklav mit Stickstoff bis zu einem Druck von 2,5 bar gefüllt und 281 g Ethylenoxid innerhalb 2 Stunden bei 110°C zudosiert. Nach einer Abreaktionszeit von 1 Stunde wurde zur Entfernung des restlichen Ethylenoxids bei 1 mbar und 110°C 30 Minuten lang entgast.

Zur Entfernung des Katalysators wurde das Polyoxypropylen-polyoxyethylen-polyol mit 200 g synthetischem Magnesiumsilikat und 50 g Wasser verrührt und die Feststoffe durch Druckfiltration abgetrennt. Nach anschließender Abdestillation des Reaktionswassers bei 100°C, 1 mbar in 2 Stunden wurden dem Polyoxypropylen-polyoxyethylen-polyol 1 500 ppm Ditert.-butyl-p-kresol zur Stabilisierung einverleibt.

Das erhaltene Polyoxypropylen-polyoxyethylen-polyol besaß eine Hydroxylzahl von 28, entsprechend einem Molekulargewicht von ungefähr 6 010, eine Viskosität von 1 090 mPa · s bei 25°C, einen pH-Wert von 9,7 und einen Restwassergehalt von 0,025 Gew.-%.

### Vergleichsbeispiel IV

Herstellung eines mit Triethanolamin gestarteten Polyoxypropylen-polyoxyethylen-polyols mit 5 Gew.-% Ethylenoxideinheiten, bezogen auf das Gewicht der Alkylenoxideinheiten, im Ethylenoxidendblock

Man verfuhr analog den Angaben des Vergleichsbeispiels III, verwendete jedoch die Einsatzstoffe in folgenden Mengen:

| | |
|---|---|
| 149,0 g | Triethanolamin, |
| 37,5 g | 45 gew.-%ige wäßrige Kaliumhydroxidlösung, |
| 5 180,0 g | 1,2-Propylenoxid und |
| 281,0 g | Ethylenoxid. |

Das erhaltene Polyoxypropylen-polyoxyethylen-polyol besaß eine Hydroxylzahl von 35, entsprechend einem Molekulargewicht von ungefähr 4 800, eine Viskosität von 830 mPa · s bei 25°C, einen pH-Wert von 10,0 und einen Restwassergehalt von 0,03 Gew.-%.

### Vergleichsbeispiel V

Handelsübliches mit Glycerin gestartetes Polyoxypropylen-polyoxyethylen-polyol mit 14 Gew.-% Ethylenoxideinheiten, bezogen auf das Gewicht der Alkylenoxideinheiten, im Ethylenoxidendblock, einer Hydroxylzahl von 27, entsprechend einem Molekulargewicht von 6 230, einer Viskosität von 700 mPa·s bei 25°C, einem pH-Wert von 7,5 und einem Restwassergehalt von 0,03 Gew.-%.

### Vergleichsbeispiel VI

Handelsübliches mit Glycerin gestartetes Polyoxypropylen-polyoxyethylen-polyol mit 14 Gew.-% Ethylenoxideinheiten, bezogen auf das Gewicht der Alkylenoxideinheiten, im Ethylenoxidendblock, einer Hydroxylzahl von 35, entsprechend einem Molekulargewicht von 4 810, einer Viskosität von 840 mPa·s bei 25°C, einem pH-Wert von 8,0 und einem Restwassergehalt von 0,03 Gew.-%.

### Vergleichsbeispiel VII

Handelsübliches mit 1,3-Propylenglykol gestartetes Polyoxypropylen-polyoxyethylen-polyol mit 21 Gew.-% Ethylenoxideinheiten, bezogen auf das Gewicht der Alkylenoxideinheiten, im Ethylenoxidendblock, einer Hydroxylzahl von 29, entsprechend einem Molekulargewicht von 3 870, einer Viskosität von 800 mPa·s bei 25°C, einem pH-Wert von 8,5 und einem Restwassergehalt von 0,03 Gew.-%.

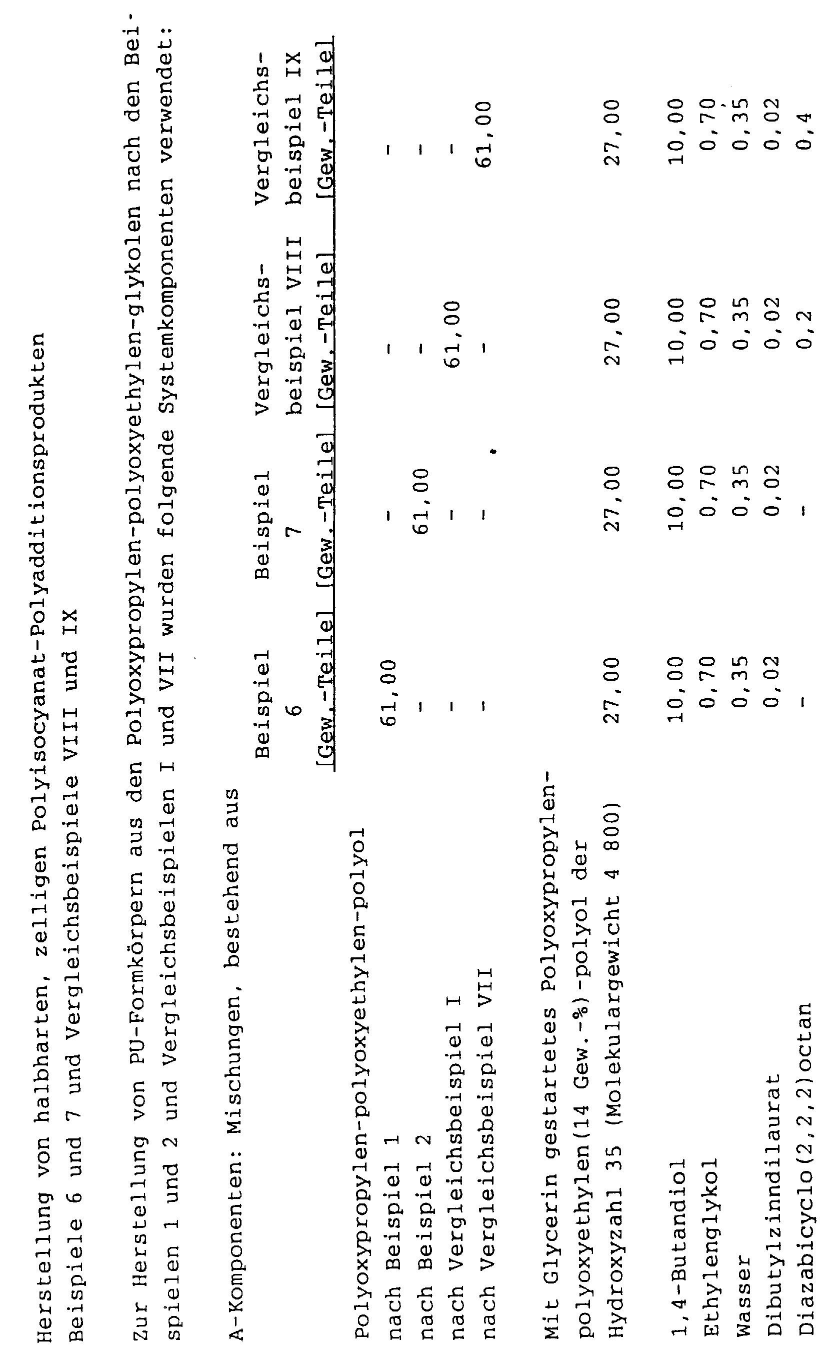

### B-Komponente

Urethangruppen enthaltende Polyisocyanatmischung mit einem NCO-Gehalt von 23,0 Gew.-%, hergestellt durch Umsetzung von 4,4'-MDI mit einer Mischung aus Dipropylenglykol und Polyoxypropylen-glykolen mit einem Molekulargewicht bis 500.

Zur Herstellung der halbharten, zelligen Polyisocyanat-Polyadditionsprodukte wurden die A- und B-Komponente bei 23°C in den nachfolgend genannten Mengen intensiv gemischt, die Reaktionsmischung in einen offenen Becher oder ein Formwerkzeug eingefüllt und dort aufschäumen und aushärten gelassen.

Zur Bestimmung von Startzeit, Abbindezeit, Steigzeit und freiem Raumgewicht wurden bei Raumtemperatur freigeschäumte Becherschäume hergestellt. Zur Bestimmung der Knickzeit und der mechanischen Eigenschaften der Polyurethanteile wurde die Reaktionsmischung auch in ein auf 50°C temperiertes, metallisches Formwerkzeug mit den inneren Abmessungen 20 x 20 x 1 cm eingefüllt und das Formwerkzeug geschlossen. Nach einer Formstandzeit von 2 Minuten wurde der PU-Formkörper entformt.

### Beispiele 6a bis 6e

Mischungsverhältnis bei Index 100 = 100 Gew.-Teile A-Komponente : : 62,38 Gew.-Teile B-Komponente

| | a | b | c | d | e |
|---|---|---|---|---|---|
| Mischungsverhältnis 100: | 58 | 60 | 62 | 64 | 66 |
| | | | | | |
| Startzeit (s) | 18 | 18 | 17 | 17 | 17 |
| Abbindezeit (s) | 27 | 27 | 27 | 27 | 27 |
| Steigzeit (s) | 45 | 47 | 49 | 50 | 56 |
| freies Raumgew. (g/l) | 265 | 236 | 221 | 200 | 185 |
| | | | | | |
| Knickzeit (min) | >8 | 5,0 | 4,0 | 4,0 | 4,0 |
| Gewicht Platte (g) | 257 | 258 | 257 | 250 | 247 |
| Zugfestigkeit (N/mm²) | 1,6 | 2,5 | 3,7 | 4,4 | 4,4 |
| Dehnung (%) | 75 | 210 | 295 | 300 | 290 |
| Weiterreißfestigk. (N/mm) | 5,3 | 7,0 | 7,2 | 7,3 | 6,6 |
| Schrumpf (mm) | -1 | -1 | -1,2 | -1 | 0,8 |
| Shore A | 59 | 62 | 61 | 60 | 56 |

### Beispiele 7a bis 7e

Mischungsverhältnis bei Index 100 = 100 Gew.-Teile A-Komponente : 62,38 Gew.-Teile B-Komponente

| | a | b | c | d | e |
|---|---|---|---|---|---|
| Mischungsverhältnis 100: | 58 | 60 | 62 | 64 | 66 |
| | | | | | |
| Startzeit (s) | 15 | 14 | 14 | 16 | 14 |
| Abbindezeit (s) | 23 | 21 | 21 | 22 | 19 |
| Steigzeit (s) | 46 | 45 | 44 | 49 | 48 |
| freies Raumgew. (g/l) | 260 | 233 | 215 | 207 | 195 |
| | | | | | |
| Knickzeit (min) | 4,8 | 3,8 | 4,0 | 4,0 | 3,5 |
| Gewicht Platte (g) | 245 | 246 | 241 | 241 | 236 |
| Zugfestigkeit (N/mm² | 1,9 | 3,8 | 4,0 | 4,4 | 4,2 |
| Dehnung (%) | 150 | 300 | 290 | 290 | 270 |
| Weiterreißfestigk. (N/mm) | 5,8 | 7,4 | 7,1 | 7,2 | 6,6 |
| Schrumpf (mm) | -0,5 | 0 | 0 | -0,5 | -1 |
| Shore A | 56 | 60 | 58 | 60 | 58 |

### Vergleichsbeispiele VIIIa bis VIIIe

Mischungsverhältnis bei Index 100 = 100 Gew.-Teile A-Komponente : 62,26 Gew.-Teile B-Komponente

| | a | b | c | d | e |
|---|---|---|---|---|---|
| Mischungsverhältnis 100: | 58 | 60 | 62 | 64 | 66 |
| | | | | | |
| Startzeit (s) | 18 | 18 | 16 | 17 | 17 |
| Abbindezeit (s) | 25 | 24 | 25 | 24 | 25 |
| Steigzeit (s) | 45 | 48 | 49 | 52 | 54 |
| freies Raumgew. (g/l) | 242 | 223 | 201 | 182 | - |
| | | | | | |
| Knickzeit (min) | 6,0 | 4,5 | 5,5 | 7,0 | 6,5 |
| Gewicht Platte (g) | 242 | 236 | 241 | 241 | 239 |
| Zugfestigkeit (N/mm²) | 3,6 | 3,8 | 3,2 | 4,0 | 3,6 |
| Dehnung (%) | 300 | 290 | 240 | 290 | 270 |
| Weiterreißfestigk. (N/mm) | 7,1 | 7,0 | 8,9 | 8,2 | 7,7 |
| Schrumpf (mm) | -0,8 | -0,3 | -0,5 | -0,5 | 0,0 |
| Shore A | 66 | 67 | 69 | 72 | 68 |

### Vergleichsbeispiele IXa bis IXe

Mischungsverhältnis bei Index 100 = 100 Gew.-Teile A-Komponente : 60,74 Gew.-Teile B-Komponente

| | a | b | c | d | e |
|---|---|---|---|---|---|
| Mischungsverhältnis 100: | 57 | 59 | 61 | 63 | 65 |
| | | | | | |
| Startzeit (s) | 15 | 15 | 17 | 15 | 16 |
| Abbindezeit (s) | 20 | 20 | 22 | 21 | 21 |
| Steigzeit (s) | 43 | 44 | 47 | 50 | 54 |
| freies Raumgew. (g/l) | 272 | 244 | 233 | - | 187 |
| | | | | | |
| Knickzeit (min) | 3,5 | 3,3 | 3,5 | 3,8 | 3,5 |
| Gewicht Platte (g) | 246 | 252 | 249 | 245 | 234 |
| Zugfestigkeit (N/mm²) | 2,9 | 4,7 | 3,8 | 4,7 | 4,7 |
| Dehnung (%) | 235 | 320 | 250 | 270 | 260 |
| Weiterreißfestigk.(N/mm) | 9,1 | 8,6 | 9,1 | 6,2 | 3,3 |
| Schrumpf (mm) | -1,0 | -0,5 | -0,8 | -1,0 | -1,0 |
| Shore A | 61 | 66 | 66 | 66 | 65 |

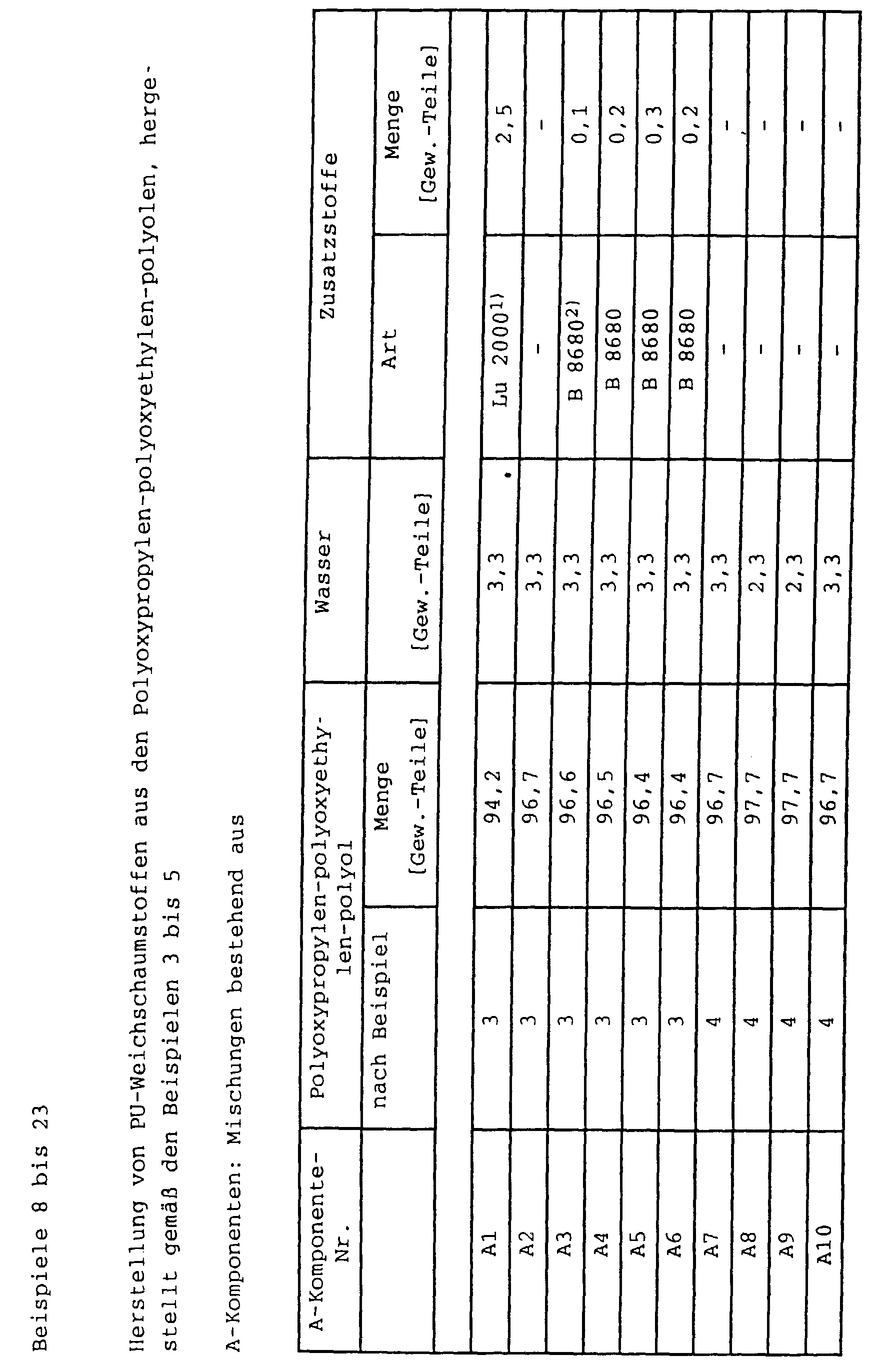

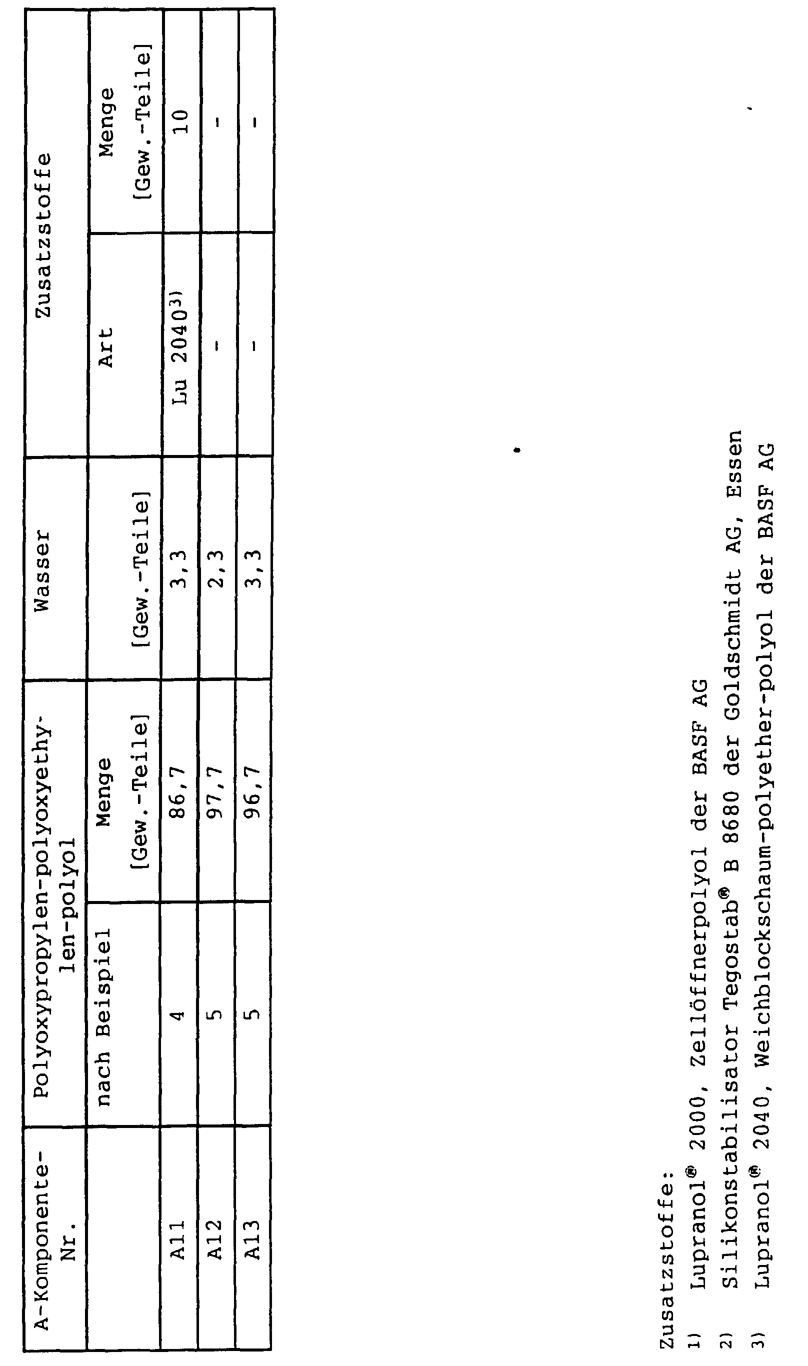

### B-Komponenten:

- B1:: Mischung aus Diphenylmethan-diisocyanaten und Polyphenyl-polymethylen-polyisocyanaten (Roh-MDI) mit einem NCO-Gehalt von 32,4 Gew.-% und einem Gehalt an MDI-Isomeren von 74 Gew.-%.
- B2:: Urethangruppen enthaltende Polyisocyanatmischung mit einem NCO-Gehalt von 26,3 Gew.-%, hergestellt durch Umsetzung eines Roh-MDI mit einem MDI-Isomerengehalt von 39,5 Gew.-% mit einem Polyoxypropylen-polyoxyethylentriol der Hydroxyzahl 55.

Zur Herstellung der PU-Weichschaumstoffe wurden die A- und B-Komponenten bei 23°C in Mengen entsprechend dem nachfolgend genannten NCO-Index intensiv gemischt, die Reaktionsmischung in einen offenen Becher oder ein Formwerkzeug eingefüllt und dort aufschäumen und aushärten gelassen.

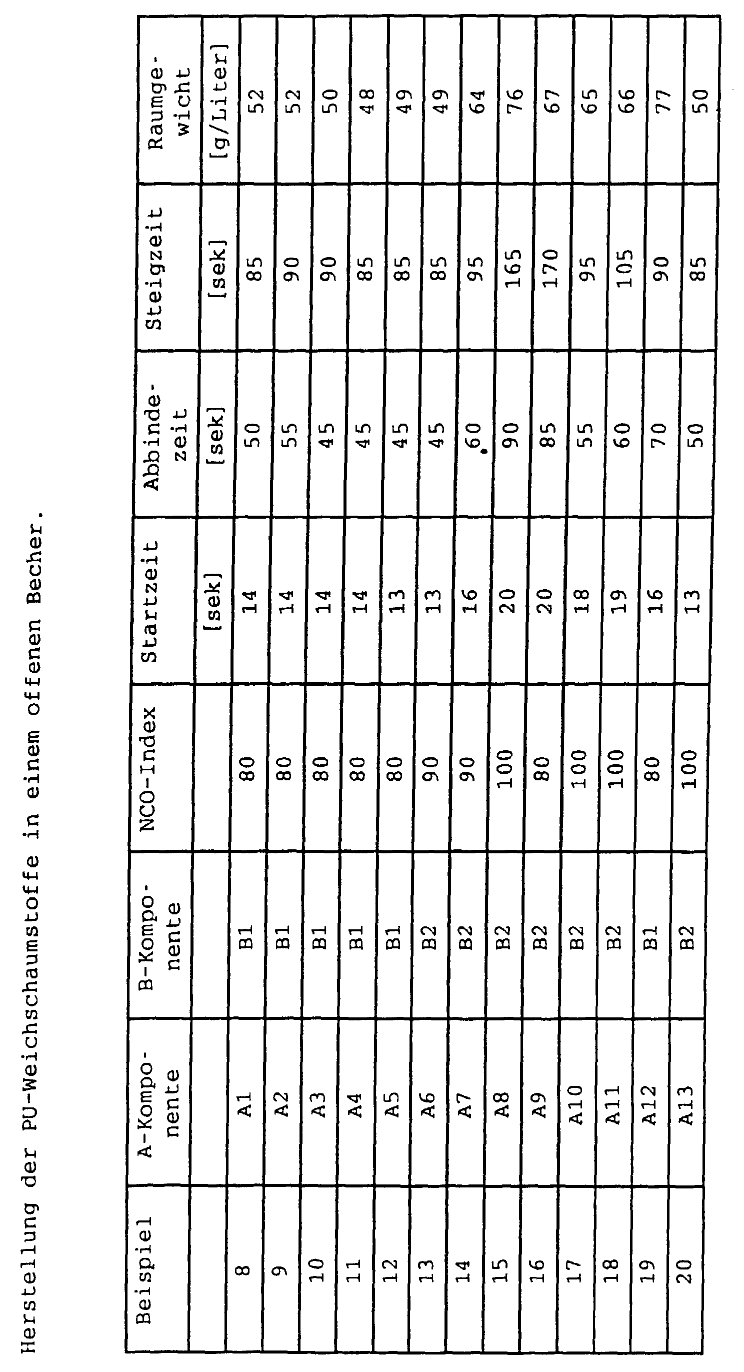

### Herstellung von PU-Weichschaumstoff-Formkörper

Die Reaktionsmischung wurde in ein auf 50°C temperiertes, metallisches Formwerkzeug mit den inneren Abmessungen 40 x 40 x 10 cm eingefüllt, das Formwerkzeug geschlossen und die Reaktionsmischung aufschäumen gelassen. Nach einer Formstandzeit von 5 Minuten wurden die elastischen Weichschaumstoff-Formkörper entformt.

| | Bsp. 21 | Bsp. 22 | Bsp. 23 |
|---|---|---|---|
| Formulierung gemäß Beispiel | 12 | 19 | 20 |
| Raumgewicht g/l nach DIN 53 420 | 53,8 | 73,9 | 49,3 |
| Zugfestigkeit kPa nach DIN 53 571 | 119 | 82,4 | 109 |
| Dehnung % nach DIN 53 571 | 105 | 109 | 114 |
| Druckverformungsrest % nach DIN 53 572 | 9,7 | 8,8 | 12,3 |
| Stauchhärte 40 % kPa nach DIN 53 577 | 7,0 | 5,2 | 5,0 |

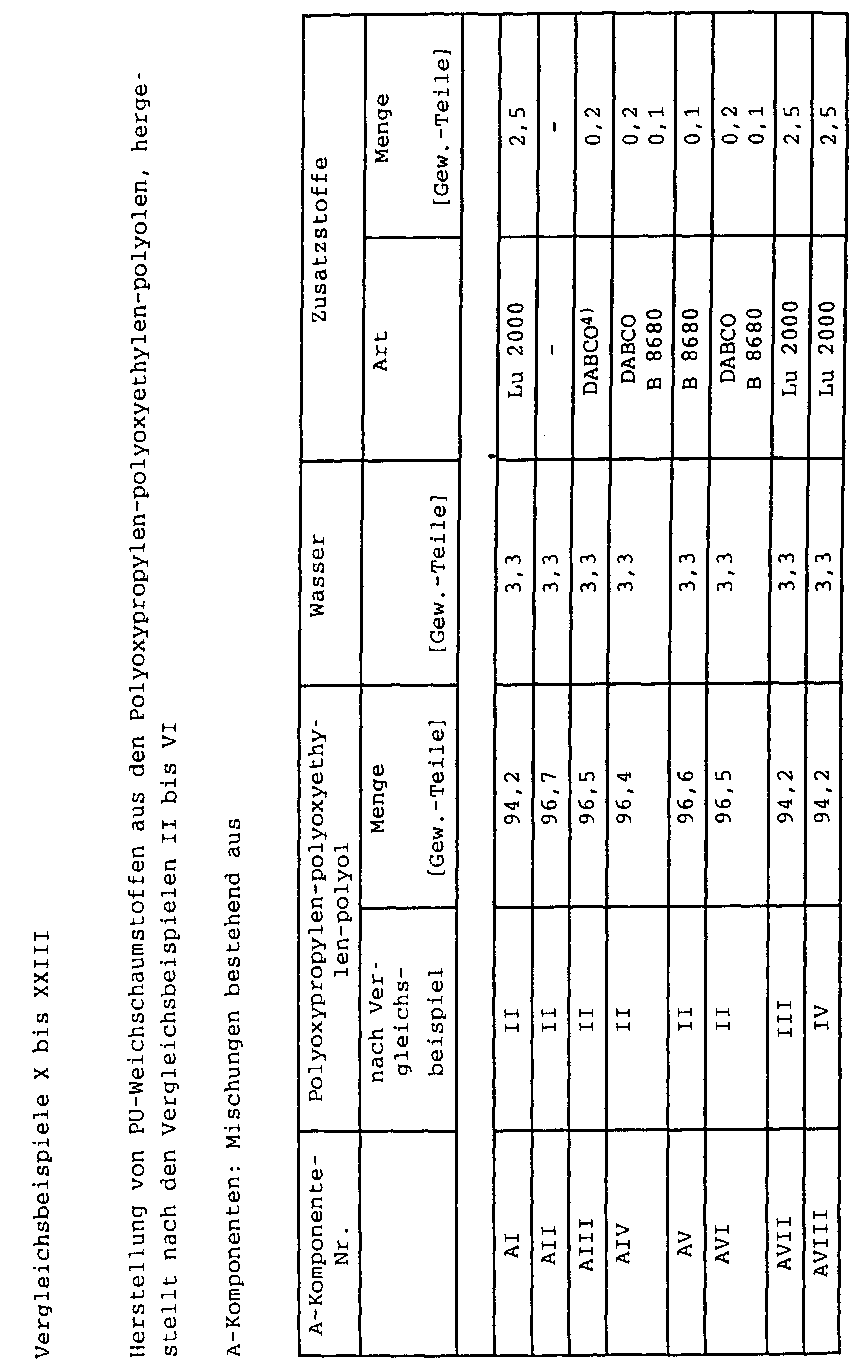

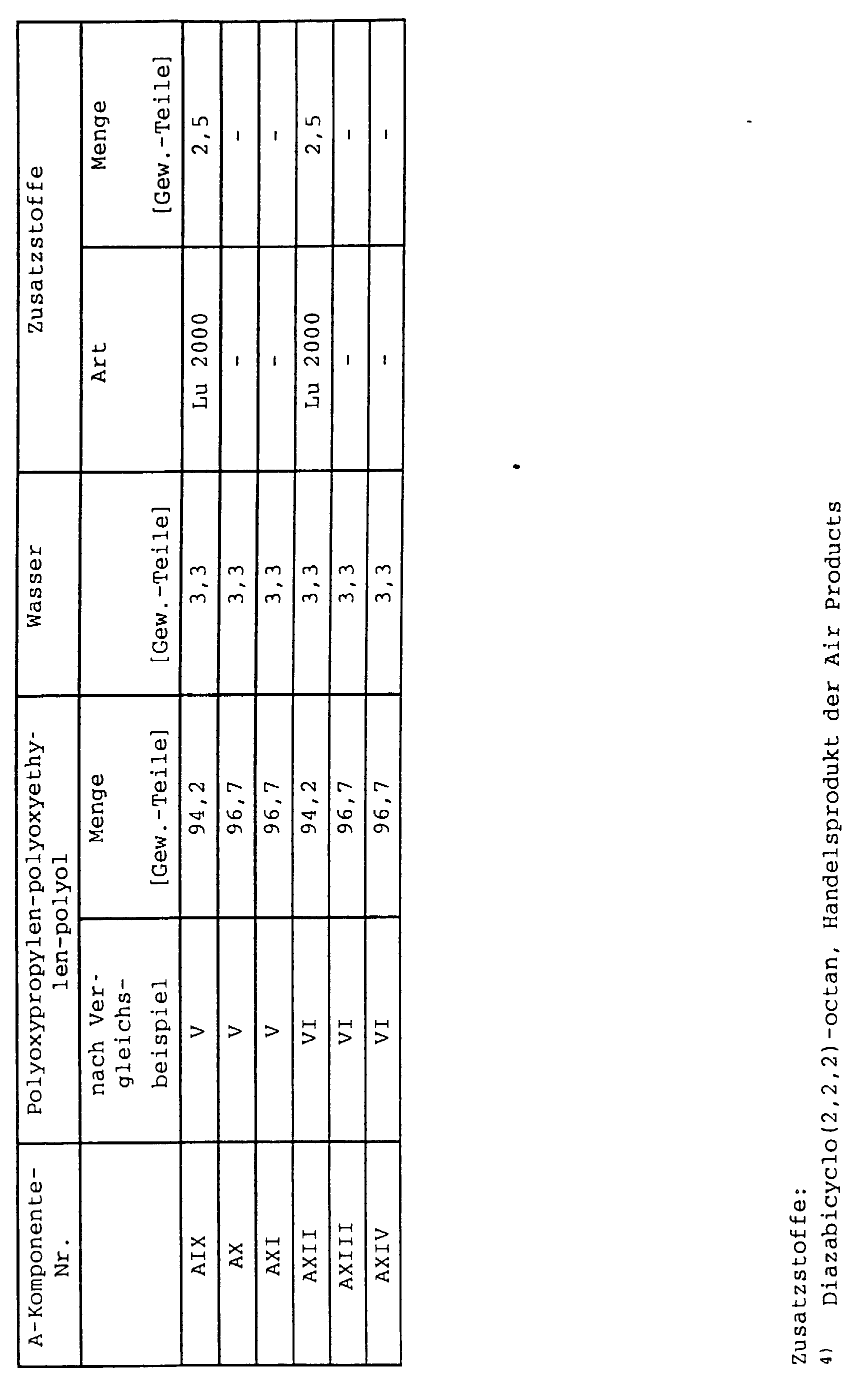

### B-Komponenten:

- B1:: Mischung aus Diphenylmethan-diisocyanaten und Polyphenyl-polymethylen-polyisocyanaten (Roh-MDI) mit einem NCO-Gehalt von 32,4 Gew.-% und einem Gehalt an MDI-Isomeren von 74 Gew.-%.
- B2:: Urethangruppen enthaltende Polyisocyanatmischung mit einem NCO-Gehalt von 26,3 Gew.-%, hergestellt durch Umsetzung eines Roh-MDI mit einem MDI-Isomerengehalt von 39,5 Gew.-% mit einem Polyoxypropylen-polyoxyethylentriol der Hydroxyzahl 55.

Zur Herstellung der PU-Weichschaumstoffe wurden die A- und B-Komponenten bei 23°C in Mengen entsprechend dem nachfolgend genannten NCO-Index intensiv gemischt, die Reaktionsmischung in einen offenen Becher eingefüllt und dort aufschäumen und aushärten gelassen.

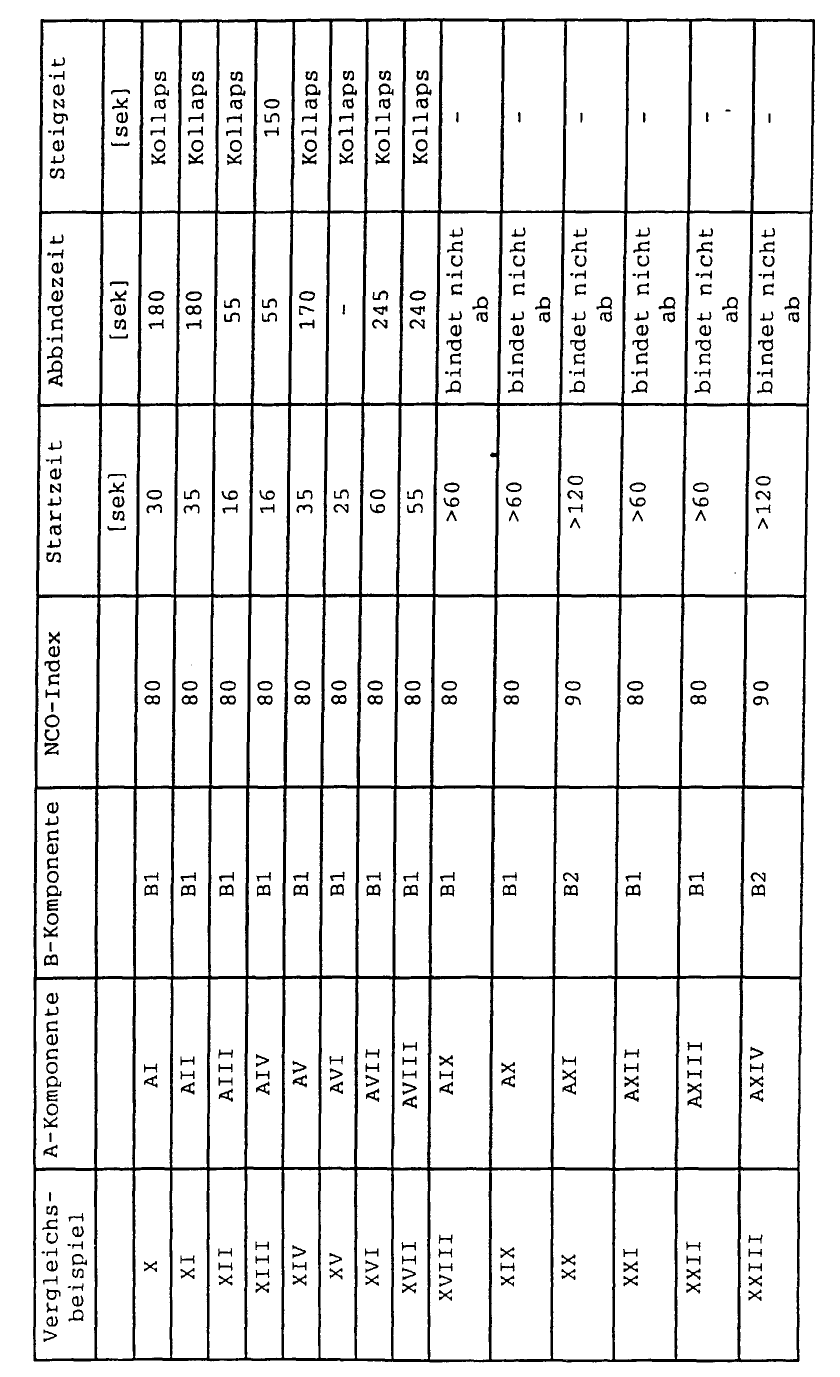

Die Beispiele und Vergleichsbeispiele zeigen, daß die Reaktivität der erfindungsgemäßen Polyoxyalkylen-polyole deutlich größer ist als die vergleichbarer amingestarteter Polyoxyalkylen-polyole mit Piperazin und Triethanolamin als Startermoleküle.

Während die mit Piperazin und Triethanolamin gestarteten Polyoxyalkylen-polyole die Herstellung von PU-Formkörpern in Abwesenheit von niedermolekularen tertiären Aminen als Katalysatoren nicht erlauben, ist dies mit den erfindungsgemäßen hochreaktiven Polyoxypropylen-polyoxyethylen-polyolen problemlos möglich.

Die erfindungsgemäßen hochreaktiven Polyoxyalkylen-polyole auf Basis von N,N-Dimethyl-diaminopropan oder -diaminobutan konnten im Gemisch mit einem mit Glycerin gestarteten Polyoxypropylen-polyoxyethylen-polyol zur Herstellung von halbharten zelligen PU-Formkörpern verwendet werden, während sich die mit N,N-Dimethyl-dipropylentriamin gestarteten Polyoxyalkylen-polyole in Fluorchlorkohlenwasserstoff freien PU-Formulierungen problemlos zu PU-Weichschaumstoffen verarbeiten ließen. Es zeigte sich hierbei, daß die erfindungsgemäßen Polyoxypropylen-polyoxyethylen-polyole selbst bei einem für PU-Weichschaumstoffe sehr geringen Gehalt an Ethylenoxideinheiten im Endblock von nur 5 Gew.-% zur katalysatorfreien Herstellung der PU-Weichschaumstoffen ausreichend reaktiv waren. Im Gegensatz hierzu konnten mit Triethanolamin gestartete Polyoxypropylen-polyoxyethylen-polyole mit einem Gehalt an Ethylenoxideinheiten von 21 Gew.-% im Endblock nur unter Mitverwendung von üblichen Aminkatalysatoren zu PU-Schaumstoffen umgesetzt werden. Aminfreie Polyoxyalkylen-polyole, die unter Verwendung von mehrwertigen Alkoholen als Startermoleküle hergestellt wurden, ließen sich ebenfalls nicht katalysatorfrei zu Schaumstoffen verarbeiten. Die Polyisocyanat-Polyadditionsreaktion setzte erst nach einer Startzeit von mehr als einer Minute ein und die Reaktionsmischung band nicht mehr ab.

## Patentansprüche

1. Hochreaktive Polyoxyalkylen-polyole, die hergestellt werden durch Oxalkylierung mit mindestens einem Alkylenoxid eines Startermoleküls der Formel 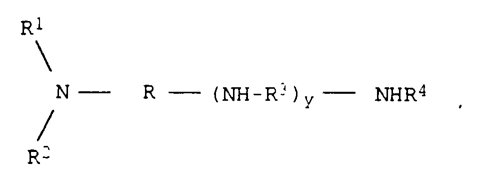 in der bedeuten
R eine Spacerbrücke, die ein Alkylenrest mit mindestens 3 Kohlenstoffatomen ist,
R¹und R² gleiche oder verschiedene, lineare oder verzweigte C₁-bis C₄-Alkylreste,
beide Reste gemeinsam einen C₄- bis C₆-Cycloalkylenrest, der anstelle einer Methylengruppe ein -O- oder -NR⁵- Brückenglied enthalten kann, in dem R⁵ ein C₁- bis C₄-Alkylrest ist, oder
gleiche oder verschiedene Dialkylaminoalkylreste der Formel 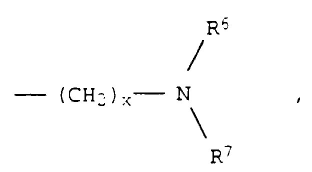 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann, und x eine ganze Zahl von mindestens 3 ist,
R³ eine C₂- bis C₄-Alkylengruppe,
y null oder eine ganze Zahl von 1 bis 3 und
R⁴ Wasserstoff oder einen C₁- bis C₄-Alkylrest mit der Maßgabe, daß für y gleich null R⁴ Wasserstoff ist.

2. Hochreaktive Polyoxyalkylen-polyole nach Anspruch 1, dadurch gekennzeichnet, daß die Spacerbrücke ein Alkylenrest, der Ether- oder Thioetherbrücken gebunden enthält, ist.

3. Hochreaktive Polyoxyalkylen-polyole nach Anspruch 1, dadurch gekennzeichnet, daß die Spacerbrücke eine -CH₂-CH₂-CH₂- oder -(CH₂)₄- Gruppe ist.

4. Hochreaktive Polyoxyalkylen-polyole nach Anspruch 1 oder 2, dadurch gekennzeichnet, daß zu ihrer Herstellung als Alkylenoxide Ethylenoxid, 1,2-Propylenoxid oder Mischungen aus Ethylenoxid und 1,2-Propylenoxid verwendet werden.

5. Hochreaktive Polyoxyalkylen-polyole nach Anspruch 1 oder 2, dadurch gekennzeichnet, daß diese eine Funktionalität von 2 bis 3 und ein Molekulargewicht von 2 800 bis 6 200 besitzen.

6. Hochreaktive Polyoxyalkylen-polyole nach Anspruch 1 oder 2, dadurch gekennzeichnet, daß das Startermolekül ausgewählt ist aus der Gruppe N,N-Dimethyl-diaminopropan-1,3, N,N-Dimethyldiaminobutan-1,4 und N,N-Dimethyl-dipropylentriamin.

7. Verfahren zur Herstellung von hochreaktiven Polyoxyalkylen-polyolen durch Oxalkylierung eines Startermoleküls mit mindestens einem Alkylenoxid bei erhöhter Temperatur, dadurch gekennzeichnet, daß als Startermolekül eines der Formel 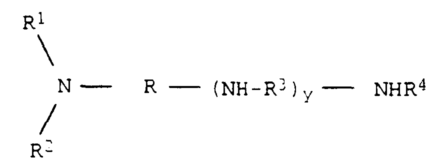 in der bedeuten
R eine Spacerbrücke, die ein Alkylenrest mit mindestens 3 Kohlenstoffatomen ist,
R¹ und R² gleiche oder verschiedene, lineare oder verzweigte C₁-bis C₄-Alkylreste,
beide Reste gemeinsam einen C₄- bis C₆-Cycloalkylenrest, der anstelle einer Methylengruppe ein -O- oder -NR⁵- Brückenglied enthalten kann, in dem R⁵ ein C₁- bis C₄-Alkylrest ist, oder
gleiche oder verschiedene Dialkylaminoalkylreste der Formel 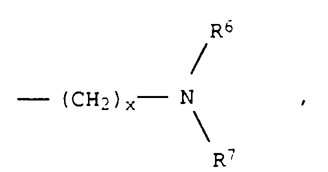 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann, und x eine ganze Zahl von mindestens 3 ist,
R³ eine C₂- bis C₄-Alkylengruppe,
y null oder eine ganze Zahl von 1 bis 3 und
R⁴ Wasserstoff oder einen C₁- bis C₄-Alkylrest mit der Maßgabe, daß für y gleich null R⁴ Wasserstoff ist,
eingesetzt wird.

8. Verfahren zur Herstellung von hochreaktiven Polyoxyalkylen-polyolen mit einem Molekulargewicht im Bereich von 2 000 bis 10 000 durch Oxalkylierung eines Startermoleküls mit mindestens einem Alkylenoxid aus der Gruppe Ethylenoxid und 1,2-Propylenoxid bei erhöhter Temperatur, dadurch gekennzeichnet, daß man als Startermoleküle N,N-Dimethyl-diaminopropan-1,3, N,N-Dimethyl-diaminobutan-1,4 oder N,N-Dimethyldipropylentriamin verwendet.

9. Verwendung von hochreaktiven Polyoxyalkylen-polyolen gemäß Anspruch 1 zur Herstellung von kompakten oder zelligen, flexiblen Polyisocyanat-Polyadditionsprodukten.

## Claims

1. A highly reactive polyoxyalkylene-polyol prepared by oxyalkylation of an initiator molecule of the formula 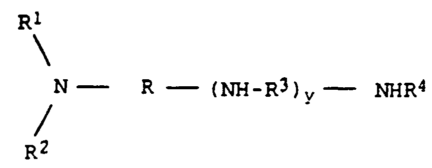 where
R i s a spacer bridge which is an alkylene radical having at least 3 carbon atoms,
R¹ and R² are identical or different, linear or branched C₁- to C₄-alkyl, both radicals together are C₄- to C₆-cycloalkylene, which may contain an -O- or -NR⁵- bridge where R⁵ is C₁- to C₄-alkyl, in place of a methylene group, or are identical or different dialkylaminoalkyl of the formula 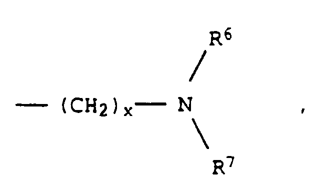 where R⁶ and R⁷ are identical or different, linear or branched C₁- to C₄-alkyl, or the two radicals together are C₄- to C₆-cycloalkylene, which may contain an -O- or -NR⁵- bridge in bonded form in place of a methylene group, and x is an integer of at least 3,
R³ is C₂- to C₄-alkylene,
y is zero or an integer from 1 to 3, and
R⁴ is hydrogen or C₁- to C₄-alkyl, with the proviso that R⁴ is hydrogen if y is zero,
by means of at least one alkylene oxide.

2. A highly reactive polyoxyalkylene-polyol as claimed in claim 1, wherein the spacer bridge is an alkylene radical containing, in bonded form, ether or thioether bridges.

3. A highly reactive polyoxyalkylene-polyol as claimed in claim 1, wherein the spacer bridge is a -CH₂-CH₂-CH₂- or -(CH₂)₄- group.

4. A highly reactive polyoxyalkylene-polyol as claimed in claim 1 or 2, wherein the alkylene oxide used for its preparation is ethylene oxide, 1,2-propylene oxide or a mixture of ethylene oxide and 1,2-propylene oxide.

5. A highly reactive polyoxyalkylene-polyol as claimed in claim 1 or 2, which has a functionality of from 2 to 3 and a molecular weight of from 2800 to 6200.

6. A highly reactive polyoxyalkylene-polyol as claimed in claim 1 or 2, wherein the initiator molecule is selected from the group consisting of N,N-dimethyl-1,3-diaminopropane, N,N-dimethyl-1,4-diaminobutane and N,N-dimethyldipropylenetriamine.

7. A process for the preparation of a highly reactive polyoxyalkylene-polyol by oxyalkylation of an initiator molecule by means of at least one alkylene oxide at elevated temperature, wherein the initiator molecule used is one of the formula 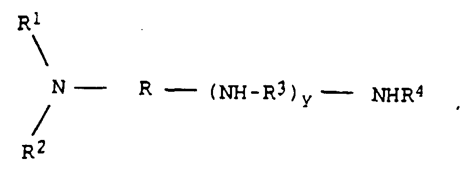 where
R is a spacer bridge which is an alkylene radical having at least 3 carbon atoms,
R¹ and R² are identical or different, linear or branched C₁- to C₄-alkyl, both radicals together are C₄- to C₆-cycloalkylene, which may contain an -O- or -NR⁵- bridge where R⁵ is C₁- to C₄-alkyl, in place of a methylene group, or are identical or different dialkylaminoalkyl of the formula 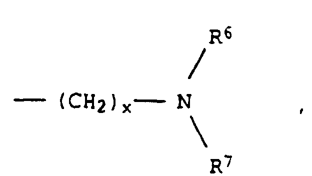 where R⁶ and R⁷ are identical or different, linear or branched C₁- to C₄-alkyl, or the two radicals together are C₄- to C₆-cycloalkylene, which may contain an -O- or -NR⁵- bridge in bonded form in place of a methylene group, and x is an integer of at least 3,
R³ is C₂- to C₄-alkylene,
y is zero or an integer from 1 to 3, and
R⁴ is hydrogen or C₁- to C₄-alkyl, with the proviso that R⁴ is hydrogen if y is zero,

8. A process for the preparation of a highly reactive polyoxyalkylene-polyol having a molecular weight in the range from 2000 to 10,000 by oxyalkylation of an initiator molecule by means of at least one alkylene oxide from the group consisting of ethylene oxide and 1,2-propylene oxide, at elevated temperature, wherein the initiator molecule used is N,N-dimethyl-1,3-diaminopropane, N,N-dimethyl-1,4-diaminobutane or N,N-dimethyldipropylenetriamine.

9. A method of using a highly reactive polyoxyalkylene-polyol as claimed in claim 1 for the preparation of compact or cellular, flexible polyisocyanate polyaddition products.

## Revendications

1. Polyoxyalkylène-polyols très réactifs que l'on prépare par oxyalkylation, avec au moins un oxyde d'alkylène, d'une molécule d'amorçage répondant à la formule 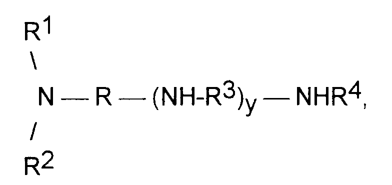 dans laquelle
R représente un pont d'écartement qui représente un radical alkylène contenant au moins 3 atomes de carbone,
R¹ et R² représentent des radicaux alkyle en C₁-C₄, linéaires ou ramifiés, identiques ou différents,
les deux radicaux ensemble représentant un radical cycloalkylène en C₄-C₆ qui peut contenir, à la place d'un groupe méthylène, un élément pontal -O- ou -NR⁵- où R⁵ représente un radical alkyle en C₁-C₄, ou bien
représentent des radicaux dialkylaminoalkyle identiques ou différents répondant à la formule 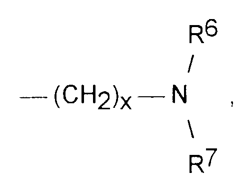 dans laquelle R⁶ et R⁷ représentent des radicaux alkyle en C₁- C₄, linéaires ou ramifiés, identiques ou différents, ou bien les deux radicaux ensemble représentent un radical cycloalkylène en C₄-C₆ qui peut contenir, à la place d'un groupe méthylène, un élément pontal -O- ou -NR⁵- à l'état lié, et x représente un nombre entier au moins égal à 3,
R³ représente un groupe alkylène en C₃-C₄,
y représente zéro ou un nombre entier de 1 à 3, et
R⁴ représente un atome d'hydrogène ou un groupe alkyle en C₁-C₄, avec cette mesure que, lorsque y est égal à zéro, R⁴ représente un atome d'hydrogène.

2. Polyoxyalkylène-polyols très réactifs selon la revendication 1, caractérisés en ce que le pont d'écartement représente un radical alkylène qui contient, à l'état lié, des ponts éthers ou thioéthers.

3. Polyoxyalkylène-polyols très réactifs selon la revendication 1, caractérisés en ce que le pont d'écartement représente un groupe -CH₂-CH₂-CH₂- ou -(CH₂)₄.

4. Polyoxyalkylène-polyols très réactifs selon la revendication 1 ou 2, caractérisés en ce qu'on utilise, pour leur préparation, à titre d'oxydes d'alkylènes, l'oxyde d'éthylène, l'oxyde de 1,2-propylène ou encore des mélanges d'oxyde d'éthylène et d'oxyde de 1,2-propylène.

5. Polyoxyalkylène-polyols très réactifs selon la revendication 1 ou 2, caractérisés en ce qu'ils possèdent une fonctionnalité de 2 à 3 et un poids moléculaire de 2.800 à 6.200.

6. Polyoxyalkylène-polyols très réactifs selon la revendication 1 ou 2, caractérisés en ce que la molécule d'amorçage est choisie parmi le groupe comprenant le N,N-diméthyl-diaminopropane-1,3, le N,N-diméthyl-diaminobutane-1,4 et la N,N-diméthyl-dipropylène-triamine.

7. Procédé pour la préparation de polyoxyalkylène-polyols très réactifs par oxyalkylation d'une molécule d'amorçage avec au moins un oxyde d'alkylène à température élevée, caractérisé en ce qu'on met en oeuvre, à titre de molécule d'amorçage, une molécule répondant à la formule 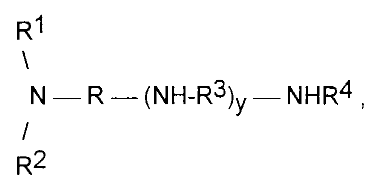 dans laquelle
R représente un pont d'écartement qui représente un radical alkylène contenant au moins 3 atomes de carbone,
R¹ et R² représentent des radicaux alkyle en C₁-C₄, linéaires ou ramifiés, identiques ou différents,
les deux radicaux ensemble représentant un radical cycloalkylène en C₄-C₆ qui peut contenir, à la place d'un groupe méthylène, un élément pontal -O- ou -NR⁵- où R⁵ représente un radical alkyle en C₁-C₄, ou bien
représentent des radicaux dialkylaminoalkyle identiques ou différents répondant à la formule 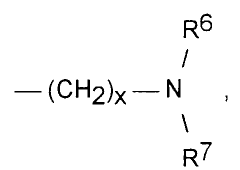 dans laquelle R⁶ et R⁷ représentent des radicaux alkyle en C₁- C₄, linéaires ou ramifiés, identiques ou différents, ou bien les deux radicaux ensemble représentent un radical cycloalkylène en C₄-C₆ qui peut contenir, à la place d'un groupe méthylène, un élément pontal -O- ou -NR⁵- à l'état lié, et x représente un nombre entier au moins égal à 3,
R³ représente un groupe alkylène en C₃-C₄,
y représente zéro ou un nombre entier de 1 à 3, et
R⁴ représente un atome d'hydrogène ou un groupe alkyle en C₁-C₄, avec cette mesure que, lorsque y est égal à zéro, R⁴ représente un atome d'hydrogène.

8. Procédé pour la préparation de polyoxyalkylène-polyols très réactifs possédant un poids moléculaire dans le domaine de 2.000 à 10.000 par oxyalkylation d'une molécule d'amorçage avec au moins un oxyde d'alkylène choisi parmi le groupe comprenant l'oxyde d'éthylène et l'oxyde de 1,2-propylène, à température élevée, caractérisé en ce qu'on utilise à titre de molécule d'amorçage, le N,N-diméthyl-diaminopropane-1,3, le N,N-diméthyl-aminobutane-1,4 et la N,N-diméthyl-dipropylènetriamine.

9. Utilisation de polyoxyalkylène-polyols très réactifs selon la revendication 1 pour la préparation de produits de polyaddition de polyisocyanates flexibles alvéolaires ou compacts.
